# EUROPEAN PATENT SPECIFICATION

(11) **EP 0 730 677 B1**
(45) Date of publication and mention of the grant of the patent: **14.02.2001**
(21) Application number: 94901467.4
(22) Date of filing: 12.11.1993
(51) Int. Cl.: C25B 3/08, B05D 5/12, B05D 3/02, B32B 18/00, B32B 9/04, C25C 3/08

(54) **REFRACTORY/CARBON COMPONENTS OF ALUMINIUM PRODUCTION CELLS**
FEUERFESTES MATERIAL/ KOHLENSTOFF KOMPONENTEN FÜR ALUMINIUMELEKTROLY- SEZELLEN
COMPOSANTS CARBONES/REFRACTAIRES DE CUVES DE PRODUCTION D'ALUMINIUM

(43) Date of publication of application: 11.09.1996
(73) Proprietor: MOLTECH Invent S.A., 2320 Luxembourg (LU)
(72) Inventor: SEKHAR, Jainagesh A., Cincinnati, OH 45221-0012 (US)
(74) Representative: Cronin, Brian Harold John
(86) International application number: US9310993
(87) International publication number: WO9513407

(56) References cited:
- US-A- 4 308 115
- US-A- 4 678 760
- US-A- 4 975 191
- US-A- 5 217 583

## Description

### Field of the Invention

The invention relates to the application of refractory borides to carbon-based components of cells for the production of aluminium by electrolysis of alumina dissolved in a cryolite-based and other molten halide electrolytes, in particular carbon cathodes. The invention also relates to such cells having carbon-based components protected from the corrosive attacks of liquids and/or gaseous components of the electrolyte in the form of elements, ions or compounds, by having refractory borides applied to their surfaces, as well as the use of these cells for the production of aluminium.

### Background of the Invention

Aluminium is produced conventionally by the Hall-Heroult process, by the electrolysis of alumina dissolved in cryolite-based molten electrolytes at temperatures up to around 950°C. A Hall-Héroult reduction cell typically has a steel shell provided with an insulating lining of refractory material, which in turn has a lining of carbon which contacts the molten constituents. Conductor bars connected to the negative pole of a direct current source are embedded in the carbon cathode substrate forming the cell bottom floor. The cathode substrate is usually an anthracite based carbon lining made of prebaked cathode blocks, joined with a ramming mixture of anthracite, coke, and coal tar.

In Hall-Héroult cells, a molten aluminium pool acts as the cathode. The carbon lining or cathode material has a useful life of three to eight years, or even less under adverse conditions. The deterioration of the cathode bottom is due to erosion and penetration of electrolyte and liquid aluminium as well as intercalation of sodium, which causes swelling and deformation of the cathode carbon blocks and ramming mix. In additon, the penetration of sodium species and other ingredients of cryolite or air leads to the formation of toxic compounds including cyanides.

Difficulties in operation also arise from the accumulation of undissolved alumina sludge on the surface of the carbon cathode beneath the aluminium pool which forms insulating regions on the cell bottom. Penetration of cryolite and aluminium through the carbon body and the deformation of the cathode carbon blocks also cause displacement of such cathode blocks. Due to displacement of the cathode blocks, aluminium reaches the steel cathode conductor bars causing corrosion thereof leading to deterioration of the electrical contact, non uniformity in current distribution and an excessive iron content in the aluminium metal produced.

Extensive research has been carried out with Refractory Hard Metals (RHM) such as TiB₂ as cathode materials. TiB₂ and other RHM's are practically insoluble in aluminium, have a low electrical resistance, and are wetted by aluminium. This should allow aluminium to be electrolytically deposited directly on an RHM cathode surface, and should avoid the necessity for a deep aluminium pool. Because titanium diboride and similar Refractory Hard Metals are wettable by aluminium, resistant to the corrosive environment of an aluminium production cell, and are good electrical conductors, numerous cell designs utilizing Refractory Hard Metal have been proposed, which would present many advantages, notably including the saving of energy by reducing the ACD.

The use of titanium diboride and other RHM current-conducting elements in electrolytic aluminium production cells is described in US Patents Nos 2,915,442, 3,028,324, 3,215,615, 3,314,876, 3,330,756, 3,156,639, 3,274,093 and 3,400,061. Despite extensive efforts and the potential advantages of having surfaces of titanium diboride at the cell cathode bottom, such propositions have not been commercially adopted by the aluminium industry.

Various types of TiB₂ or RHM layers applied to carbon substrates have failed due to poor adherence and to differences in thermal expansion coefficients between the titanium diboride material and the carbon cathode block.

US Patent N° 3,400,061 describes a cell without an aluminium pool but with a drained cathode of Refractory Hard Metal which consists of a mixture of Refractory Hard Metal, at least 5 percent carbon, and 10 to 20% by weight of pitch binder, baked at 900°C or more and rammed into place in the cell bottom. Such composite cathodes have found no commercial use probably due to susceptibility to attack by the electrolytic bath.

US Patent N° 3,661,736 claims a composite drained cathode for an aluminium production cell, comprising particles or pieces of arc-melted "RHM alloy" embedded in an electrically conductive matrix of carbon or graphite and a particulate filler such as aluminium carbide, titanium carbide or titanium nitride. However, in operation, grain boundaries and the carbon or graphite matrix are attacked by electrolyte and/or aluminium, leading to rapid destruction of the cathode.

US Patent N° 4,093,524 discloses bonding tiles of titanium diboride and other Refractory Hard Metals to a conductive substrate such as graphite. But large differences in thermal expansion coefficients between the RHM tiles and the substrate cause problems.

US Patent N° 4,308,114 discloses a cathode surface of RHM in a graphitic matrix made by mixing the RHM with a pitch binder and graphitizing at 2350°C or above. Such cathodes are subject to early failure due to rapid ablation, and possible intercalation by sodium and erosion of the graphite matrix.

U.S. Patent N° 4,466,996 proposed applying a coating composition comprising a pre-formed particulate RHM, such as TiB₂, a thermosetting binder, a carbonaceous filler and carbonaceous additives to a carbonaceous cathode substrate, followed by curing and carbonisation. But it was still not possible by this method to obtain coatings of satisfactory adherence that could withstand the operating conditions in an aluminium production cell.

The use of self-propagating combustion synthesis (also called micropyretic reaction) to produce net shaped ceramic electrodes for use in aluminium production has been described in WO 92/13977 and WO 92/22682, wherein a particulate combustion mixture for producing a ceramic or metal-ceramic composite was mixed with particulate fillers and inorganic binders. None of these materials contained carbon.

WO 93/20027 discloses a method of producing a protective refractory coating on a substrate of, *inter-alia*, carbonaceous materials by applying to the substrate a micropyretic reaction layer from a slurry containing particulate reactants in a colloidal carrier, and initiating a micropyretic reaction. The micropyretic slurry optionally also contains some preformed refractory material, and the micropyretic slurry may be applied on a non-reactive sub-layer.

WO 93/20026 discloses a body of carbonaceous material coated with a protective surface coating which improves the resistance of the body to oxidation or corrosion and which may also enhance the bodies electrical conductivity and/or its electrochemical activity. This protective coating is applied from a colloidal slurry containing particulate reactant or non-reactant substances, or a mixture of particulate reactant and non-reactant substances, which when the body is heated to a sufficient elevated temperature form the protective coating by reaction sintering and/or sintering without reaction.

US Patent 5,374,342 describes a component of an aluminium production cell made of a carbon-based composite material containing a refractory hard metal compound selected from borides, carbides, nitrides, oxides and combinations and mixtures thereof, and at least one of aluminium, aluminium alloys and aluminium compounds. Combinations of the aforesaid compounds include borocarbides, and oxycompounds such as oxynitrides. The method of production comprises firstly providing a reaction mixture of aluminium and precursors which react to form the refractory hard metal boride, carbide or borocarbide or mixtures thereof, and optional fillers and additives. The reaction mixture is then mixed with particulate carbon in an amount of from 1 to 20 parts by weight of carbon for 1 part by weight of the reaction mixture; and with a colloidal binder containing at least one of colloidal silica, alumina, yttria, ceria, thoria, zirconia, magnesia, lithia, the amount of the colloidal binder being sufficient to fully wet the carbon particles.

The resulting mixture is pressed or compacted into shape and dried and heated to initiate reaction of the reaction mixture by self-propagating micropyretic reaction. It is then possible to coat the formed block or mass with a coating of desired composition including, in particular for cathode applications, coatings of an aluminium wettable material such as titanium diboride or other refractory metal borides, carbides, nitrides etc. or to bond layers of such materials to the formed block or mass.

WO 93/25494 discloses a cell component of an electrolytic cell for aluminium production comprising a solidified carbon containing paste which is a compact mixture of one or more particulate carbonaceous material(s) with a non-carbonaceous non-polluting colloidal binder and optionally with one or more fillers, the binder being a suspension of one or more colloids, or being derived from one or more colloid precursors or colloid reagents optionally with one or more chelating agents. The binder is for example a suspension containing at least one of colloidal silica, alumina, yttria, ceria, thoria, zirconia, magnesia or lithia. Particularly when the cell component is a cathode or a cell lining, the formed mass or block can be coated with an aluminium-wettable refractory material.

US Patent 5,320,717 provides a method of bonding bodies of Refractory Hard Material (RHM) or other refractory composites to carbon cathodes of aluminium protection cells using a colloidal slurry comprising particulate preformed RHM in a colloidal carrier selected from colloidal alumina, colloidal yttria and colloidal ceria as a glue between the bodies and the cathode or other component. The slurry is dried to bond the bodies to the cathode or other component, the dried slurry acting as a conductive thermally-matched glue which provides excellent bonding of the bodies to the cathode or other component.

To date, no carbon-based composite material containing an aluminium-wettable refractory hard material has proven satisfactory for use as component of aluminium production cells. Such materials have been expensive to produce and it has been difficult to produce the materials in large pieces serviceable in aluminium production cells. Moreover, the resistance of such materials to attack by melt components has been unsatisfactory. Attempts to coat carbon-based materials with an aluminium-wettable refractory coating or to attach plates or tiles of such materials, have also not yet overcome all of the problems, in particular adherence, resistance to thermal shock, etc.

### Objects of the Invention

The invention aims to overcome the deficiencies of past attempts to utilize refractory materials in particular refractory borides for protecting the surface of carbonaceous cathodes, cell linings or other cell components from the attack of corrosive liquids in aluminium production cells.

An object of the invention is to provide composite structures having refractory boride coatings that are well adherent to a carbon-containing substrate body and have the desired mechanical, physical, chemical, and electrochemical characteristics.

One specific object of the invention is to provide a part-manufactured cell component which can easily be converted into a cell component with an aluminium-wettable refractory layer on a carbon-containing body, which has superior properties when used as a cathode or cell lining of an aluminium production cell, to protect such carbonaceous material from the attack of sodium and air which produces deformation of the cathode blocks and formation of dangerous nitrogen compounds such as cyanides.

Another specific object of the invention is to provide an easy-to-implement method of producing composite carbon-containing cell components coated with refractory borides from part-manufactured components by heat treatment preferably before use of the cell component.

By protecting the carbonaceous cell components from attack by NaF or other aggressive ingredients of the electrolyte, the cell efficiency is improved. Because NaF in the electrolyte no longer reacts with the carbon cell bottom and walls, the cell functions with a defined bath ratio without a need to replenish the electrolyte with NaF.

The aluminum-wettable refractory coating, preferably a boride, will also permit the elimination of the thick aluminium pool required to partially protect the carbon cathode, enabling the cell to operate with a drained cathode.

The refractory boride coatings have the following attributes: excellent wettability by molten aluminium, excellent adherence to the carbon-containing substrates, inertness to attack by molten aluminium and cryolite, low cost, environmentally safe, ability to absorb thermal and mechanical shocks without delamination from the anthracite-based carbon or other carbon-based substrates, durability in the environment of an aluminium production cell, and ease of application and processing.

A futher object of the invention is to produce refractory boride coatings on a carbon-based substrate from a part-manufactured composite component, for instance with a graphite or anthracite-based carbon substrate used in an aluminium production cell in contact with the molten electrolyte and/or with molten aluminium, whereby the coating of the composite body protects the substrate against the ingress of cryolite and sodium and is in turn protected by the protective film of aluminium on the coating itself.

The coated components thus produced find many applications on account of their excellent resistance, protection, and stability when exposed to the corrosive action of liquids and fumes existing in the cell or formed during electrolysis even when the temperature of operation is low as in the Low Temperature electrolysis process for the production of aluminium (see for example US Patent N° 4,681,671 and WO 93/10281).

### Summary of the Invention

In its main aspect the invention provides a part-manufactured component of an aluminium production cell, in particular a cathode or a cell lining of an electrolytic cell for the production of aluminium by the electrolysis of alumina in a halide-based molten electrolyte, such as cryolite or other fluoride based melts, fluoride-chloride melts or possibly chloride melts, which cell component when fully manufactured comprises an aluminium-wettable refractory coating on a heat-stable baked carbon-containing body.

According to the invention, this part-manufactured cell component is a layered composite of two precursors, namely a precursor layer of the aluminium-wettable refractory coating on a non-baked or part-baked precursor of the heat-stable carbon-containing body.

The precursor layer of the aluminium-wettable refractory coating contains at least one aluminium-wettable refractory material in particulate form, or a particulate micropyretic reaction mixture which when ignited reacts to form at least one aluminium-wettable refractory material, or a mixture thereof, and non-carbon fillers and binders.

The non-baked or part-baked precursor of the heat-stable carbon-containing body comprises particulate carbon compacted with a heat-convertible binder which when subjected to heat treatment binds the particulate carbon into the heat-stable carbon-containing body of the fully-manufactured cell component.

This layered composite forming the part-manufactured cell component is convertible to the fully-manufactured cell component by heat treatment to form the aluminium-wettable refractory coating and simultaneously bind and heat-stabilize the carbon-containing body, thus coforming the coating and the body whereby the coating is firmly attached to the body.

The precursor of the heat-stable carbon-containing body may comprise a compacted mixture of particulate carbon, a particulate micropyretic reaction mixture which when ignited reacts to form at least one aluminium-wettable refractory material, and a colloidal binder.

The precursor layer of the aluminium-wettable refractory coating may contain a particulate micropyretic reaction mixture which when ignited reacts to form at least one aluminium-wettable refractory material, mixed with pre-formed particulate aluminium-wettable refractory material and a colloidal binder.

In one specific embodiment, the precursor of the heat-stable carbon-containing body and the precursor layer of the aluminium-wettable refractory coating each contain the same reaction mixture and the same colloidal binder.

Usually, the precursor of the heat-stable carbon-containing body contains from 0.5 to 20 parts by weight of particulate carbon for 1 part by weight of the reaction mixture and the precursor layer contains from 0.5 to 20 parts by weight of pre-formed particulate aluminium-wettable refractory material for 1 part by weight of the reaction mixture.

Advantageously, the precursor of the heat-stable carbon-containing body contains from 1 to 8 parts by weight, preferably from 1.5 to 4 parts by weight, of particulate carbon for 1 part by weight of the reaction mixture, and the coating precursor layer contains from 1 to 8 parts by weight, preferably from 1.5 to 4 parts by weight, of pre-formed particulate aluminium-wettable refractory material for 1 part by weight of the reaction mixture.

Moreover, the weight fraction of the reaction mixture in the precursor of the heat-stable carbon-containing body is preferably at least approximately the same as the weight fraction of the reaction mixture in the precursor layer, thus providing for uniform reaction conditions throughout the body and coating.

A preferred reaction mixture comprises aluminium, boron oxide and titanium dioxide at least approximately in the molar ratio: 10Al : 3B₂O₃ : 3TiO₂.

Usually, the reaction mixture and particulate carbon of the precursor of the heat-stable carbon-containing body are mixed with from 0.1ml to 1ml, preferably from 0.15ml to 0.5ml, of the colloidal binder per gram of the reaction mixture plus the particulate carbon. This colloidal binder of the precursor of the heat-stable carbon-containing body may comprise at least one of colloidal alumina, silica, yttria, ceria, thoria, zirconia, magnesia, lithia and hydroxides, acetates and formates thereof as well as oxides and hydroxides of other metals, cationic species and mixtures thereof.

The reaction mixture and the pre-formed particulate refractory material of the precursor layer of the refractory coating are also preferably mixed with from 0.1ml to 1ml, preferably from 0.15ml to 0.5ml, of the colloidal binder per gram of the reaction mixture plus the pre-formed particulate refractory hard material. This colloidal binder of the precursor layer may also comprise the same colloids as mentioned above, and advantageously both the precursor layer of the aluminium-wettable refractory coating and the precursor of the heat-stable carbon-containing body contain colloidal alumina.

In another advantageous embodiment, the precursor layer of the aluminium-wettable refractory coating consists of pre-formed particulate refractory material in a dried colloid, in particular a pre-formed boride selected from borides of titanium, chromium, vanadium, zirconium, hafnium, niobium, tantalum, molybdenum and cerium.

For instance, the pre-formed particulate refractory boride in the precursor layer is titanium diboride and the reaction mixture of the precursor of the heat-stable carbon-containing material reacts to produce titanium diboride.

Such pre-formed particulate refractory boride in the coating precursor layer preferably has a particle size below 100 micrometers and comprises particles of different sizes to optimize packing of the particles, with a particle size ratio of at least 2:1. The particle size ratio of the pre-formed particulate refractory boride is preferably in the range 3:1 to 10:1, with particles with sizes in the range from about 3 micrometers to about 50 micrometers.

In another embodiment, the precursor of the heat-stable carbon-containing body comprises a compacted mixture of particulate carbon with aluminium and with at least one compound of lithium, aluminium, cerium, calcium and sodium in a liquid carrier, which mixture reacts when heated to form a binder comprising at least one of aluminium carbide, aluminium oxycarbide, aluminium nitride and aluminium oxynitride or mixtures thereof with metallic aluminium.

For example, the precursor of the heat-stable carbon-containing body comprises an aluminium compound selected from aluminium nitrate, aluminium carbonate, aluminium halides, aluminium borate and aluminium carbide and mixtures thereof.

Alternatively, or additionally, the precursor of the heat-stable carbon-containing body comprises a lithium compound selected from lithium acetate, lithium carbonate, lithium fluoride, lithium chloride, lithium oxalate, lithium nitride, lithium nitrate, lithium formate and lithium aryl, lithium tetraborate and mixtures thereof.

Usually, the precursor of the heat-stable carbon-containing body comprises 1 to 20 parts by weight of particulate aluminium for 80 to 99 parts by weight of particulate carbon, the particulate aluminium and particulate carbon being mixed with the compounds in the liquid carrier in an amount of 5 to 20 ml of the liquid carrier per 100 grams of the particulate aluminium and particulate carbon.

The aforesaid liquid carrier of this embodiment usually has a binding agent selected from methyl cellulose, polyvinyl alcohol and colloids, in particular colloid alumina. Exemplary colloids include those of alumina, silica, yttria, ceria, thoria, zirconia, magnesia, lithia and hydroxides, acetates and formates thereof as well as oxides and hydroxides of other metals, cationic species and mixtures thereof.

The particulate aluminium in the precursor of the heat-stable carbon body preferably has a dimension of at most 44 micrometer (-325 mesh) and may be wet milled aluminium derived from scrap foil.

The precursor layer of the aluminium-wettable refractory coating of this embodiment may also contain a particulate micropyretic reaction mixture which when ignited reacts to form at least one aluminium-wettable refractory material, mixed with pre-formed particulate aluminium-wettable refractory material and a colloidal binder, according to the details set out above.

Alternatively, the precursor layer of the aluminium-wettable refractory coating consists of pre-formed particulate refractory material in a dried colloid, once again according to the details set out above.

In another embodiment of the part-manufactured cell component, the precursor of the heat-stable carbon-containing body comprises a compacted mixture of particulate carbon with a non-carbonaceous non-polluting colloidal binder and optionally with one or more fillers, the binder being a suspension of one or more colloids, or being derived from one or more colloid precursors or colloid reagents optionally with one or more chelating agents.

In this case, the precursor of the heat-stable carbon-containing body usually comprises 50 to 99 weight% of particulate carbon (preferably 50 to 95%), 0 to 30 weight% of fillers and 1 to 30 weight% of the binder (preferably 5 to 30%).

Advantageously, the precursor of the heat-stable carbon-containing body comprises aluminium, alumina or a mixture of aluminium and alumina as filler(s), and colloidal alumina as binder.

Again, with this substrate-forming body, the precursor layer of the aluminium-wettable refractory coating can be any of those set out above, i.e. with a micropyreticic reaction mixture, or with pre-formed particulate refractory material, or mixtures thereof.

The particulate carbon of the precursor of the heat-stable carbon-containing body is selected from petroleum coke, metallurgical coke, anthracite, graphite, amorphous carbon, fullerene or a mixture thereof, wherein the size of the particulate carbon is up to 40mm, preferably between 1 micrometer and 30mm. and the particulate carbon preferably contains between 5% and 40% of particles having a size below 0.2mm.

At least part of the particulate carbon may be fibrous.

The resulting heat-stable carbon-containing body practically always contains at least 50 weighty of carbon, usually from 70 to 85 weight% of carbon.

Generally, the precursor of the heat-stable carbon-containing body can include one or more fillers selected from : bonding enhancing materials such as methylcellulose, particulate alumina or urea; metallic, intermetallic, semi-metallic, polymeric, refractory and/or ceramic materials such as borides, carbides, nitrides, silicides, oxides, oxynitrides, and mixtures thereof; pyrolizable chlorosilanes, polycarbosilanes, polysilanes and other organometal polymers which pyrolyze to useful products for enhancing bonding, or their pyrolyzed products; and mixtures thereof.

In another embodiment of the part-manufactured cell component, the precursor of the heat-stable carbon-containing body comprises a compact mixture of particulate carbon with pitch as a heat-curable carbonaceous binder, for example a mixture of particulate anthracite, metallurgical coke and graphite with pitch, e.g. according to the usual mixtures used to produce cathodes of aluminium production cells.

In the case of a pitch binder, the precursor of the heat-stable carbon-containing body can further comprise one or more of the non-carbonaceous colloidal binders listed above. The precursor layer of the aluminium-wettable refractory coating preferably contains a particulate micropyretic reaction mixture which when ignited reacts to form the aluminium-wettable refractory material, mixed with pre-formed particulate aluminium-wettable refractory material and a colloidal binder. Alternatively, the precursor layer of the aluminium-wettable refractory coating on the pitch-bound body consists of pre-formed particulate refractory material in a dried colloid.

### Method of Production

Another aspect of the invention is a method of manufacturing a component of an aluminium production cell, in particular a cathode or a cell lining of an electrolytic cell for the production of aluminium by the electrolysis of alumina in a fluoride-based or mixed fluoride-chloride or a chloride-based molten electrolyte, which cell component comprises an aluminium-wettable refractory coating layer on a heat-stable baked carbon-containing body, the method comprising providing a part-manufactured cell component which is a layered composite of two precursors, as set out above, and converting the layered composite to the fully-manufactured cell component by heat treatment to form the aluminium-wettable refractory coating and simultaneously bind and heat-stabilize the carbon-containing body.

The type of heat treatment will depend on the types of reactants and binders present. In those cases where a micropyretic reaction mixture is present in one or both of the precursors of the coating and the body, the heating will be sufficient to initiate a self-sustaining micropyretic reaction, as exemplified below.

This method can be applied to all of the different embodiments and features of the part-manufactured components set out above.

As a rule, the heat treatment will generally be carried out prior to fitting or assembly of the components in an aluminium production cell.

To assist rapid wetting of the components by molten aluminium, the refractory material coated on the substrate may be exposed to molten aluminium in the presence of a flux assisting penetration of aluminium into the refractory material, the flux for example comprising a fluoride, a chloride or a borate, of at least one of lithium and sodium, or mixtures thereof. Such treatment favors aluminization of the refractory coating by the penetration therein of aluminium.

This aluminization treatment can be carried out prior to or after fitting the components in an aluminium production cell.

### Cell Components and Cells

The invention also relates to components of an aluminium production cell, in particular a cathode or a cell lining of an electrolytic cell for the production of aluminium by the electrolysis of alumina in a molten halide electrolyte, usually a fluoride-based molten electrolyte, which cell components are obtained by simultaneous heat treatment of a layered composite of two precursors, and comprising:
- an aluminium-wettable refractory coating obtained from a precursor layer containing at least one aluminium-wettable refractory material in particulate form, or a particulate micropyretic reaction mixture which when ignited reacts to form at least one aluminium-wettable refractory material, or a mixture thereof, and non-carbon fillers and binders; on
- a heat-stable baked carbon-containing body obtained from a non-baked or part-baked precursor comprising particulate carbon compacted with a heat-convertible binder which when subjected to heat treatment binds the particulate carbon into the heat-stable carbon-containing body of the fully-manufactured cell component.

The cell component is usually in the form of a cathode block that can be assembled into a cathodic cell bottom and the aluminium-wettable refractory coating is preferably aluminized prior to use of the component in the cell.

The component advantageously forms part of a cathode through which the electrolysis current flows, the refractory boride coating forming a cathodic surface in contact with the cathodically-produced aluminium. For example, if it is part of a drained cathode, the refractory boride coating forms the cathodic surface on which the aluminium is deposited cathodically, and the component is arranged usually upright or at a slope for the aluminium to drain from the cathodic surface.

Another aspect of the invention is an aluminium production cell comprising a component as defined above which in operation of the cell is exposed to molten cryolite or aluminium, this component in particular being a cathode or forming part of a cathodic cell bottom.

The invention also encompassses use of such cells for the production of aluminium by the electrolysis of alumina dissolved in a halide melt such as a cryolite-based molten electrolyte, where the product aluminium is in contact with the aluminium-wettable refractory coating on the component.

A method of assembling and operating the cells comprises producing composite cell components as set out above by heat treating part-manufactured components in the form of blocks to produce carbon-based bodies coated with aluminium-wettable refractory coatings; placing the coated components in the cell so the coatings of refractory material will be contacted by the cathodically produced aluminium; and operating the cell with the coating protecting the substrate from attack by the cathodically-produced aluminium and by the molten electrolyte.

Operation of the cell is advantageously in a low temperature process, with the molten halide electrolyte containing dissolved alumina at a temperature below 900°C, usually at a temperature from 680°C to 880°C. The low temperature electrolyte may be a fluoride melt, a mixed fluoride-chloride melt or a chloride melt.

This low temperature process is operated at low current densities on account of the low alumina solubility. This necessitates the use of large anodes and corresponding large cathodes, exposing large areas of these materials to the corrosive conditions in the cell, such large exposed areas being well protected by the refractory coatings according to the invention which are just as advantageous at these lower temperatures.

However, the invention is particularly advantageous also in conventional cell designs where the components are assembled to form the cell bottom, thus enabling retrofitting of existing cells with the inclusion of an aluminium-wettable cathode suface.

### Detailed Description of a Preferred Embodiment

A preferred embodiment of the invention will be further described by way of example. In this example, the upper layer, which is the precursor layer of the aluminium-wettable refractory coating, contains a particulate micropyretic reaction mixture of aluminium, boron oxide and titanium dioxide in the molar ratio: 10Al : 3B₂O₃ : 3TiO₂, mixed with pre-formed particulate aluminium-wettable refractory material and colloidal alumina as binder.

The bottom layer, which is the precursor of the heat-stable carbon-containing body, comprises a compacted mixture of particulate carbon, the same particulate micropyretic reaction mixture of aluminium, boron oxide and titanium dioxide as the top layer, and also colloidal alumina as binder.

The reaction mixture was prepared from 37.5 wt% particulate Al, 99.5% pure, -325mesh (44 micron), 29 wt% purified particulate B₂0₃ (Fisher, Catalogue No. A76-500), and 33.4 wt% particulate TiO_{2,} 99+% pure, D300mesh. These weight percentages correspond to the above-indicated molar proportions.

An example of the invention was carried out on laboratory scale as follows. 80g of the reaction mixture powders was dry mixed for approximately 1 hour. The mixing time can be adjusted depending on the amount the combustion material powder and the type of mixer.

### The Upper Layer

The composition of the upper layer is 35 wt% of the reaction mixture (approximately 13.1 wt% Al, 10.2 wt% B₂0₃ and 11.7 wt% Ti0₂) and 65 wt% titanium diboride powder, -325 mesh (44 micron), to which is added 30ml of Wesbond colloidal alumina liquid binder (Wesol™ -12%) per 100g of reaction mixture plus titanium diboride powder. This binder has a specific gravity of 1.07 and contains 12 wt% alumina (3.85g alumina/30ml). After drying at 200°C, assuming all water is evaporated, the composition of the upper layer is about 12.65 wt% Al, 9.8 wt% B₂0₃, 11.25 wt% Ti0₂, 62.6 wt% TiB₂ and 3.7 wt% Al₂0₃.

### The Bottom Layer

The composition of the bottom layer is 35 wt% of the reaction mixture (approximately 13.1 wt% Al, 10.2 wt% B₂0₃ and 11.7 wt% Ti0₂) and 65 wt% mixed anthracite powder powder, particles sized between 1 micrometer and 30 mm containing up to 40% of particules having a size belw 0.2 mm, to which is added 30ml of Wesbond colloidal alumina liquid binder (Wesol™ -12%) per 100g of the reaction mixture and carbon. This binder has a specific gravity of 1.07 and contains 12 wt% alumina (3.85g alumina/30ml). After drying at 200°C, assuming all water is evaporated, the composition of the bottom layer is about 12.65 wt% Al, 9.8 wt% B₂0₃, 11.25 wt% Ti0₂, 62.6 wt% anthracite and 3.7 wt% Al₂0₃.

### Procedure

Bottom Layer : 52.5g of the reaction mixture and 97.5g of pre-mixed anthracite powder were mixed thoroughly. 45ml Wesbond colloidal alumina binder were added to the mixture and stirred completely so all the anthracite particles were wrapped in the slurry. During mixing, the slurry became warmer. The slurry was allowed to cool, which takes about 20 minutes for a 150g sample.

Upper Layer : 17.5g of the reaction mixture and 32.5g titanium diboride powder were dry mixed for 1 hour. The mixing time depends on the amount of powder and the type of mixer. 15ml Wesbond colloidal alumina binder were added to the mixture and stirred completely. The slurry was allowed to cool, which takes about 20 minutes for a 50g sample.

The Upper Layer mixture was then put in a die and the Bottom Layer mixture put into the die second. A pressure of 530 Kg/cm² was applied with a die of about 5cm diameter, to obtain a pressed cylinder made of the two layers.

The composite cylinder was removed from the die and allowed to dry in air for 24 hours. Then the cylinder was placed in a furnace at 200°C for at least 5 hours. The drying time depends on the sample size. A large size needs a longer drying time.

The composite cylinder was then placed in a furnace pre-heated to 1150°C until combustion occurs. For a 200g sample, it takes about 10 minutes to complete combustion: larger samples should take longer. After combustion, the cylinder was immersed in carbon powder for about 1/2 hour, then allowed to cool in air.

The resulting sample had an adherent aluminium-wettable refractory coating of titanium diboride/alumina on a carbon-based support also containing titanium diboride/alumina.

When tested as cathode in a laboratory aluminium production cell, the sample showed good wettability with molten aluminium and no sign of deterioration. The aluminium was found to penetrate the coating and remain there.

## Claims

1. A part-manufactured component of an aluminium production cell, in particular a cathode or a cell lining of an electrolytic cell for the production of aluminium by the electrolysis of alumina in a molten halide electrolyte, which cell component when fully manufactured comprises an aluminium-wettable refractory coating on a heat-stable baked carbon-containing body, said part-manufactured cell component being a layered composite of two precursors, comprising:
- a precursor layer of the aluminium-wettable refractory coating, said precursor layer containing at least one aluminium-wettable refractory material in particulate form, or a particulate micropyretic reaction mixture which when ignited reacts to form at least one aluminium-wettable refractory material, or a mixture thereof, and non-carbon fillers and binders; on
- a non-baked or part-baked precursor of the heat-stable carbon-containing body, comprising particulate carbon compacted with a heat-convertible binder which when subjected to heat treatment binds the particulate carbon into the heat-stable carbon-containing body of the fully-manufactured cell component;
the layered composite being convertible to the fully-manufactured cell component by heat treatment to form said aluminium-wettable refractory coating and simultaneously bind and heat-stabilize the carbon-containing body.

2. The part-manufactured cell component of claim 1 wherein the precursor of the heat-stable carbon-containing body comprises a compacted mixture of particulate carbon, a particulate micropyretic reaction mixture which when ignited reacts to form at least one aluminium-wettable refractory material, and a colloidal binder.

3. The part-manufactured cell component of claim 2 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

4. The part-manufactured cell component of claim 3 wherein the precursor of the heat-stable carbon-containing body and the precursor layer of the aluminium-wettable refractory coating each contain the same reaction mixture and the same colloidal binder.

5. The part-manufactured cell component of claim 4 wherein the precursor of the heat-stable carbon-containing body contains from 0.5 to 20 parts by weight of particulate carbon for 1 part by weight of the reaction mixture and said precursor layer contains from 0.5 to 20 parts by weight of pre-formed particulate aluminium-wettable refractory material for 1 part by weight of the reaction mixture.

6. The part-manufactured cell component of claim 5 wherein the precursor of the heat-stable carbon-containing body contains from 1 to 8 parts by weight, preferably from 1.5 to 4 parts by weight, of particulate carbon for 1 part by weight of the reaction mixture, and said precursor layer contains from 1 to 8 parts by weight, preferably from 1.5 to 4 parts by weight, of pre-formed particulate aluminium-wettable refractory material for 1 part by weight of the reaction mixture.

7. The part-manufactured cell component of claim 4 wherein the weight fraction of the reaction mixture in the precursor of the heat-stable carbon-containing body is at least approximately the same as the weight fraction of the reaction mixture in said precursor layer.

8. The part-manufactured cell component of claim 4 wherein the reaction mixture comprises aluminium, boron oxide and titanium dioxide at least approximately in the molar ratio: 10Al : 3B₂O₃ : 3TiO₂.

9. The part-manufactured cell component of claim 2 wherein the reaction mixture and particulate carbon of the precursor of the heat-stable carbon-containing body are mixed with from 0.1ml to lml, preferably from 0.15ml to 0.5ml, of the colloidal binder per gram of the reaction mixture plus the particulate carbon.

10. The part-manufactured cell component of claim 9 wherein the colloidal binder of the precursor of the heat-stable carbon-containing body comprises at least one of colloidal alumina, silica, yttria, ceria, thoria, zirconia, magnesia, lithia and hydroxides, acetates and formates thereof as well as oxides and hydroxides of other metals, cationic species and mixtures thereof.

11. The part-manufactured cell component of claim 3 wherein the reaction mixture and the pre-formed particulate refractory material of said precursor layer are mixed with from 0.1ml to 1ml, preferably from 0.15ml to 0.5ml, of the colloidal binder per gram of the reaction mixture plus the pre-formed particulate refractory hard material.

12. The part-manufactured cell component of claim 11 wherein the colloidal binder of said precursor layer comprises at least one of colloidal alumina, silica, yttria, ceria, thoria, zirconia, magnesia, lithia and hydroxides, acetates and formates thereof as well as oxides and hydroxides of other metals, cationic species and mixtures thereof.

13. The part-manufactured cell component of claims 10 and 12 wherein both the precursor layer of the aluminium-wettable refractory coating and the precursor of the heat-stable carbon-containing body contain colloidal alumina.

14. The part-manufactured cell component of claim 2 wherein the precursor layer of the aluminium-wettable refractory coating consists of pre-formed particulate refractory material in a dried colloid.

15. The part-manufactured cell component of claim 14 wherein the pre-formed particulate refractory material in said precursor layer is a boride selected from borides of titanium, chromium, vanadium, zirconium, hafnium, niobium, tantalum, molybdenum and cerium.

16. The part-manufactured cell component of claim 15 wherein the pre-formed particulate refractory boride in said precursor layer is titanium diboride and the reaction mixture of the precursor of the heat-stable carbon-containing material reacts to produce titanium diboride.

17. The part-manufactured cell component of claim 15 wherein the pre-formed particulate refractory boride in said precursor layer has a particle size below 100 micrometers.

18. The part-manufactured cell component of claim 17 wherein the pre-formed particulate refractory boride in said precursor layer comprises particles of different sizes to optimize packing of the particles, with a particle size ratio of at least 2:1.

19. The part-manufactured cell component of claim 18, wherein the particle size ratio of the pre-formed particulate refractory boride is in the range 3:1 to 10:1.

20. The cell component of claim 18 wherein the pre-formed particulate refractory boride in said precursor layer has particles with sizes in the range from about 3 micrometers to about 50 micrometers.

21. The part-manufactured cell component of claim 1 wherein the precursor of the heat-stable carbon-containing body comprises a compacted mixture of particulate carbon with aluminium and with at least one compound of lithium, aluminium, cerium, calcium and sodium in a liquid carrier, which mixture reacts when heated to form a binder comprising at least one of aluminium carbide, aluminium oxycarbide, aluminium nitride and aluminium oxynitride or mixtures thereof with metallic aluminium.

22. The part-manufactured cell component of claim 21 wherein the precursor of the heat-stable carbon-containing body comprises an aluminium compound selected from aluminium nitrate, aluminium carbonate, aluminium halides, aluminium borate and aluminium carbide and mixtures thereof.

23. The part-manufactured cell component of claim 22 wherein the precursor of the heat-stable carbon-containing body comprises a lithium compound selected from lithium acetate, lithium carbonate, lithium fluoride, lithium chloride, lithium oxalate, lithium nitride, lithium nitrate, lithium formate and lithium aryl, lithium tetraborate and mixtures thereof.

24. The part-manufactured cell component of claim 22 wherein the precursor of the heat-stable carbon-containing body comprises 1 to 20 parts by weight of particulate aluminium for 80 to 99 parts by weight of particulate carbon.

25. The part-manufactured cell component of claim 24 wherein he particulate aluminium and particulate carbon are mixed with the compounds in the liquid carrier in an amount of 5 to 20 ml of the liquid carrier per 100 grams of the particulate aluminium and particulate carbon.

26. The part-manufactured cell component of claim 21 wherein said liquid carrier comprises a binding agent selected from methyl cellulose, polyvinyl alcohol and colloids, in particular colloid alumina.

27. The part-manufactured cell component of claim 26 wherein said liquid carrier comprises a colloid of at least one of alumina, silica, yttria, ceria, thoria, zirconia, magnesia, lithia and hydroxides, acetates and formates thereof as well as oxides and hydroxides of other metals, cationic species and mixtures thereof.

28. The part-manufactured cell component of claim 24 wherein the particulate aluminium in the precursor of the heat-stable carbon body has a dimension of at most 44 micrometer (-325 mesh).

29. The part-manufactured cell component of claim 24 wherein the particulate aluminium in the precursor of the heat-stable carbon body is wet milled aluminium derived from scrap foil.

30. The part-manufactured cell component of claim 21 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

31. The part-manufactured cell component of claim 30 wherein said precursor layer contains from 0.5 to 20 parts by weight of pre-formed particulate aluminium-wettable refractory material for 1 part by weight of the reaction mixture.

32. The part-manufactured cell component of claim 31 wherein said precursor layer contains from 1 to 8 parts by weight, preferably from 1.5 to 4 parts by weight, of pre-formed particulate aluminium-wettable refractory material for 1 part by weight of the reaction mixture.

33. The part-manufactured cell component of claim 30 wherein said reaction mixture comprises aluminium, boron oxide, titanium dioxide and titanium diboride as filler, at least approximately in the molar ratio: 10Al : 3B₂O₃ : 3TiO₂ : up to 20TiB₂.

34. The part-manufactured cell component of claim 21 wherein the precursor layer of the aluminium-wettable refractory coating consists of pre-formed particulate refractory material in a dried colloid.

35. The part-manufactured cell component of claim 34 wherein the pre-formed particulate refractory material in said precursor layer is a boride selected from borides of titanium, chromium, vanadium, zirconium, hafnium, niobium, tantalum, molybdenum and cerium.

36. The part-manufactured cell component of claim 35 wherein said pre-formed particulate refractory boride in said precursor layer is titanium diboride and the reaction mixture of the precursor of the heat-stable carbon-containing material reacts to produce titanium diboride.

37. The part-manufactured cell component of claim 35 wherein said pre-formed particulate refractory boride has a particle size below 100 micrometers.

38. The part-manufactured cell component of claim 37 wherein said pre-formed particulate refractory boride comprises particles of different sizes to optimize packing of the particles, with a particle size ratio of at least 2:1.

39. The part-manufactured cell component of claim 33 wherein said particle size ratio of the pre-formed particulate refractory boride is in the range 3:1 to 10:1.

40. The part-manufactured cell component of claim 39 wherein said pre-formed particulate refractory boride has particles with sizes in the range from about 3 micrometers to about 50 micrometers.

41. The part-manufactured cell component of claim 1 wherein the precursor of the heat-stable carbon-containing body comprises a compacted mixture of particulate carbon with a non-carbonaceous non-polluting colloidal binder and optionally with one or more fillers, the binder being a suspension of one or more colloids, or being derived from one or more colloid precursors or colloid reagents optionally with one or more chelating agents.

42. The part-manufactured cell component of claim 41 wherein said binder is a suspension containing at least one of colloidal alumina, silica, yttria, ceria, thoria, zirconia, magnesia, lithia and hydroxides, acetates and formates thereof as well as oxides and hydroxides of other metals, cationic species and mixtures thereof.

43. The part-manufactured cell component of claim 41 wherein the precursor of the heat-stable carbon-containing body comprises one or more fillers selected from : bonding enhancing materials such as methyl-cellulose, particulate alumina or urea; metallic, intermetallic, semi-metallic, polymeric, refractory and/or ceramic materials such as borides, carbides, nitrides, silicides, oxides, oxynitrides, and mixtures thereof; pyrolizable chlorosilanes, polycarbosilanes, polysilanes and other organometal polymers which pyrolyze to useful products for enhancing bonding, or their pyrolyzed products; and mixtures thereof.

44. The part-manufactured cell component of claim 41 wherein the precursor of the heat-stable carbon-containing body comprises metallic aluminium as filler, in the form of particulates, chips, turnings or ground scrap pieces, or mixtures thereof.

45. The part-manufactured cell component of claim 41 wherein the precursor of the heat-stable carbon-containing body comprises 50 to 99 weight% of particulate carbon (preferably 50 to 95%), 0 to 30 weight% of fillers and 1 to 30 weight% of the binder (preferably 5 to 30%).

46. The part-manufactured cell component of claim 45 wherein the precursor of the heat-stable carbon-containing body comprises aluminium, alumina or a mixture of aluminium and alumina as filler(s), and colloidal alumina as binder.

47. The part-manufactured cell component of claim 41 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

48. The part-manufactured cell component of claim 47 wherein said precursor layer contains from 0.5 to 20 parts by weight of pre-formed particulate aluminium-wettable refractory material for 1 part by weight of the reaction mixture.

49. The part-manufactured cell component of claim 48 wherein said precursor layer contains from 1 to 8 parts by weight, preferably from 1.5 to 4 parts by weight, of pre-formed particulate aluminium-wettable refractory material for 1 part by weight of the reaction mixture.

50. The part-manufactured cell component of claim 47 wherein said reaction mixture comprises aluminium, boron oxide and titanium dioxide at least approximately in the molar ratio: 10Al : 3B₂O₃ : 3TiO₂.

51. The part-manufactured cell component of claim 41 wherein the precursor layer of the aluminium-wettable refractory coating consists of pre-formed particulate refractory material in a dried colloid.

52. The part-manufactured cell component of claim 51 wherein the pre-formed particulate refractory material in said precursor layer is a boride selected from borides of titanium, chromium, vanadium, zirconium, hafnium, niobium, tantalum, molybdenum and cerium.

53. The part-manufactured cell component of claim 52 wherein the pre-formed particulate refractory boride in said precursor layer is titanium diboride and the reaction mixture of the precursor of the heat-stable carbon-containing material reacts to produce titanium diboride.

54. The part-manufactured cell component of claim 52 wherein the pre-formed particulate refractory boride in said precursor layer has a particle size below 100 micrometers.

55. The part-manufactured cell component of claim 54 wherein the pre-formed particulate refractory boride in said precursor layer comprises particles of different sizes to optimize packing of the particles, with a particle size ratio of at least 2:1.

56. The part-manufactured cell component of claim 55 wherein the particle size ratio of the pre-formed particulate refractory boride is in the range 3:1 to 10:1.

57. The part-manufactured cell component of claim 55 wherein the pre-formed particulate refractory boride in said precursor layer has particles with sizes in the range from about 3 micrometers to about 50 micrometers.

58. The part-manufactured cell component of claim 1 wherein the particulate carbon of the precursor of the heat-stable carbon-containing body is selected from petroleum coke, metallurgical coke, anthracite, graphite, amorphous carbon, fullerene or a mixture thereof.

59. The part-manufactured cell component of claim 58 wherein the size of the particulate carbon is up to 40mm, preferably between 1 micrometer and 30mm.

60. The part-manufactured cell component of claim 59 wherein the particulate carbon contains between 5% and 40% of particles having a size below 0.2mm.

61. The part-manufactured cell component of claim 58 wherein at least part of the particulate carbon is fibrous.

62. The part-manufactured cell component of claim 1 wherein the resulting heat-stable carbon-containing body contains at least 50 weight% of carbon.

63. The part-manufactured cell component of claim 62 wherein the resulting heat-stable carbon-containing body contains from 70 to 85 weight% of carbon.

64. The part-manufactured cell component of claim 1 wherein the precursor of the heat-stable carbon-containing body comprises one or more fillers selected from : bonding enhancing materials such as methyl-cellulose, particulate alumina or urea; metallic, intermetallic, semi-metallic, polymeric, refractory and/or ceramic materials such as borides, carbides, nitrides, silicides, oxides, oxynitrides, and mixtures thereof; pyrolizable chlorosilanes, polycarbosilanes, polysilanes and other organometal polymers which pyrolyze to useful products for enhancing bonding, or their pyrolyzed products; and mixtures thereof.

65. The part-manufactured cell component of claim 1 wherein the precursor of the heat-stable carbon-containing body comprises a compact mixture of particulate carbon with pitch as a heat-curable carbonaceous binder.

66. The part-manufactured cell component of claim 65 wherein the precursor of the heat-stable carbon-containing body comprises a compact mixture of particulate anthracite, metallurgical coke, graphite with pitch.

67. The part-manufactured cell component of claim 65 wherein the precursor of the heat-stable carbon-containing body further comprises a non-carbonaceous colloidal binder.

68. The part-manufactured cell component of claim 65 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

69. The part-manufactured cell component of claim 65 wherein the precursor layer of the aluminium-wettable refractory coating consists of pre-formed particulate refractory material in a dried colloid.

70. A method of manufacturing a component of an aluminium production cell, in particular a cathode or a cell lining of an electrolytic cell for the production of aluminium by the electrolysis of alumina in a molten halide electrolyte, which cell component comprises an aluminium-wettable refractory coating layer on a heat-stable baked carbon-containing body, the method comprising :
- providing a part-manufactured cell component which is a layered composite of two precursors, as defined in claim 1 ; and
- converting the layered composite to the fully-manufactured cell component by heat treatment to form said aluminium-wettable refractory coating and simultaneously bind and heat-stabilize the carbon-containing body.

71. The method of claim 70 wherein the precursor of the heat-stable carbon-containing body is provided by mixing particulate carbon, a particulate micropyretic reaction mixture which when ignited reacts to form at least one aluminium-wettable refractory material, and a colloidal binder, and compacting this mixture.

72. The method of claim 71 wherein the precursor layer of the aluminium-wettable refractory coating is provided by mixing a particulate micropyretic reaction mixture, which when ignited reacts to form at least one aluminium-wettable refractory material, with pre-formed particulate aluminium-wettable refractory material and a colloidal binder, and compacting the mixture; and wherein the layered composite is heated rapidly to ignite both reaction mixtures substantially simultaneously.

73. The method of claim 71 comprising providing a precursor layer of the aluminium-wettable refractory coating and a precursor of the heat-stable carbon-containing body which each contain the same reaction mixture and the same colloidal binder.

74. The method of claim 73 wherein the precursor of the heat-stable baked carbon-containing body is formed by mixing from 0.5 to 20 parts by weight of particulate carbon with 1 part by weight of the reaction mixture, and said precursor layer is formed by mixing from 0.5 to 20 parts by weight of pre-formed particulate aluminium-wettable refractory material with 1 part by weight of the reaction mixture..

75. The method of claim 74 wherein the precursor of the heat-stable carbon-containing body is formed by mixing from 1 to 8 parts by weight, preferably from 1.5 to 4 parts by weight, of particulate carbon for 1 part by weight of the reaction mixture, and said precursor layer is formed by mixing from 1 to 8 parts by weight, preferably from 1.5 to 4 parts by weight, of pre-formed particulate aluminium-wettable refractory material with 1 part by weight of the reaction mixture.

76. The method of claim 74 wherein the weight fraction of the reaction mixture in the precursor of the heat-stable carbon-containing body is at least approximately the same as the weight fraction of the reaction mixture in said precursor layer.

77. The method of claim 73 wherein the reaction mixture comprises aluminium, boron oxide and titanium dioxide at least approximately in the molar ratio: 10Al : 3B₂O₃ : 3TiO₂.

78. The method of claim 70 wherein the particulate carbon of the precursor of the heat-stable carbon-containing body is selected from petroleum coke, metallurgical coke, anthracite, graphite, amorphous carbon, fullerene or a mixture thereof.

79. The method of claim 78 wherein the size of the particulate carbon is up to 40mm, preferably between 1 micrometer and 30mm.

80. The method of claim 79 wherein the particulate carbon contains between 5% and 40% of particles having a size below 0.2mm.

81. The method of claim 78 wherein at least part of the particulate carbon is fibrous.

82. The method of claim 70 wherein the resulting heat-stable carbon-containing body contains at least 50 weight% of carbon.

83. The method of claim 82 wherein the resulting heat-stable carbon-containing body contains from 70 to 85 weight% of carbon.

84. The method of claim 71 wherein the reaction mixture and particulate carbon of the precursor of the heat-stable carbon-containing body are mixed with from 0.1ml to 1ml, preferably from 0.15ml to 0.5ml, of colloidal binder per gram of the reaction mixture and particulate carbon.

85. The method of claim 84 wherein the colloidal binder of the precursor of the heat-stable carbon-containing body comprises at least one of colloidal alumina, silica, yttria, ceria, thoria, zirconia, magnesia and lithia and hydroxides, acetates and formates thereof as well as oxides and hydroxides of other metals, cationic species and mixtures thereof.

86. The method of claim 72 wherein the reaction mixture and the pre-formed particulate refractory material of said precursor layer are mixed with from 0.1ml to lml, preferably from 0.15ml to 0.5ml, of colloidal binder per gram of the reaction mixture and pre-formed particulate refractory material.

87. The method of claim 86 wherein the colloidal binder of said precursor layer comprises at least one of colloidal alumina, silica, yttria, ceria, thoria, zirconia, magnesia and lithia and hydroxides, acetates and formates thereof as well as oxides and hydroxides of other metals, cationic species and mixtures thereof.

88. The method of claims 85 and 87 wherein both the precursor layer of the aluminium-wettable refractory coating and the precursor of the heat-stable carbon-containing body contain colloidal alumina.

89. The method of claim 71 wherein the precursor layer of the aluminium-wettable refractory coating is provided by applying pre-formed particulate refractory material in a colloid and drying, the pre-formed particulate refractory material being consolidated by the heat treatment.

90. The method of claim 89 wherein the pre-formed particulate refractory material in said precursor layer is a boride selected from borides of titanium, chromium, vanadium, zirconium, hafnium, niobium, tantalum, molybdenum and cerium.

91. The method of claim 90 wherein the pre-formed particulate refractory boride in said precursor layer is titanium diboride and the reaction mixture of the precursor of the heat-stable carbon-containing material reacts to produce titanium diboride.

92. The method of claim 90 wherein the pre-formed particulate refractory boride in said precursor layer has a particle size below 100 micrometers.

93. The method of claim 92 wherein the pre-formed particulate refractory boride in said precursor layer comprises particles of different sizes to optimize packing of the particles, with a particle size ratio of at least 2:1.

94. The method of claim 93 wherein the particle size ratio of the pre-formed particulate refractory boride is in the range 3:1 to 10:1.

95. The method of claim 93 wherein the pre-formed particulate refractory boride in said precursor layer has particles with sizes in the range from about 3 micrometers to about 50 micrometers.

96. The method of claim 70 wherein the precursor of the heat-stable carbon-containing body is provided by compacting a mixture of particulate carbon with aluminium and with at least one compound of lithium, aluminium, cerium, calcium and sodium in a liquid carrier, which mixture reacts when heated to form a binder comprising at least one of aluminium carbide, aluminium oxycarbide, aluminium nitride and aluminium oxynitride or mixtures thereof with metallic aluminium.

97. The method of claim 96 wherein the precursor of the heat-stable carbon-containing body comprises an aluminium compound selected from aluminium nitrate, aluminium carbonate, aluminium halides, aluminium borate and aluminium carbide and mixtures thereof.

98. The method of claim 97 wherein the precursor of the heat-stable carbon-containing body comprises a lithium compound selected from lithium acetate, lithium carbonate, lithium fluoride, lithium chloride, lithium oxalate, lithium nitride, lithium nitrate, lithium formate and lithium aryl, lithium tetraborate and mixtures thereof.

99. The method of claim 97 wherein the precursor of the heat-stable carbon-containing body comprises 1 to 20 parts by weight of particulate aluminium for 80 to 99 parts by weight of particulate carbon.

100. The method of claim 99 wherein the particulate aluminium and particulate carbon are mixed with the compounds in the liquid carrier in an amount of 5 to 20 ml of the liquid carrier per 100 grams of the particulate aluminium and particulate carbon.

101. The method of claim 96 wherein said liquid carrier comprises a binding agent selected from methyl cellulose, polyvinyl alcohol and colloids, in particular colloid alumina.

102. The method of claim 101 wherein said liquid carrier comprises a colloid of at least one of alumina, silica, yttria, ceria, thoria, zirconia, magnesia, lithia and hydroxides, acetates and formates thereof as well as oxides and hydroxides of other metals, cationic species and mixtures thereof.

103. The method of claim 99 wherein the particulate aluminium in the precursor of the heat-stable carbon body has a dimension of at most 44 micrometer (-325 mesh).

104. The method of claim 99 wherein the particulate aluminium in the precursor of the heat-stable carbon body is wet milled aluminium derived from scrap foil.

105. The method of claim 96 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

106. The method of claim 105 wherein said precursor layer contains from 0.5 to 20 parts by weight of pre-formed particulate aluminium-wettable refractory material for 1 part by weight of the reaction mixture.

107. The method of claim 106 wherein said precursor layer contains from 1 to 8 parts by weight, preferably from 1.5 to 4 parts by weight, of pre-formed particulate aluminium-wettable refractory material for 1 part by weight of the reaction mixture.

108. The method of claim 105 wherein said reaction mixture comprises aluminium, boron oxide, titanium dioxide and titanium diboride as filler, at least approximately in the molar ratio: 10Al : 3B₂O₃ : 3TiO₂ : up to 20TiB₂.

109. The method of claim 96 wherein the precursor layer of the aluminium-wettable refractory coating is provided by applying a pre-formed particulate refractory material in a colloid and drying.

110. The method of claim 109 wherein the pre-formed particulate refractory material in said precursor layer is a boride selected from borides of titanium, chromium, vanadium, zirconium, hafnium, niobium, tantalum, molybdenum and cerium.

111. The method of claim 110 wherein said pre-formed particulate refractory boride in said precursor layer is titanium diboride and the reaction mixture of the precursor of the heat-stable carbon-containing material reacts to produce titanium diboride.

112. The method of claim 110 wherein said pre-formed particulate refractory boride has a particle size below 100 micrometers.

113. The method of claim 112 wherein said pre-formed particulate refractory boride comprises particles of different sizes to optimize packing of the particles, with a particle size ratio of at least 2:1.

114. The method of claim 113 wherein said particle size ratio of the pre-formed particulate refractory boride is in the range 3:1 to 10:1.

115. The method of claim 114 wherein said pre-formed particulate refractory boride has particles with sizes in the range from about 3 micrometers to about 50 micrometers.

116. The method of claim 70 wherein the precursor of the heat-stable carbon-containing body comprises a compacted mixture of particulate carbon with a non-carbonaceous non-polluting colloidal binder and optionally with one or more fillers, the binder being a suspension of one or more colloids, or being derived from one or more colloid precursors or colloid reagents optionally with one or more chelating agents.

117. The method of claim 116 wherein said binder is a suspension containing at least one of colloidal alumina, silica, yttria, ceria, thoria, zirconia, magnesia, lithia and hydroxides, acetates and formates thereof as well as oxides and hydroxides of other metals, cationic species and mixtures thereof.

118. The method of claim 116 wherein the precursor of the heat-stable carbon-containing body comprises one or more fillers selected from : bonding enhancing materials such as methyl-cellulose, particulate alumina or urea; metallic, intermetallic, semi-metallic, polymeric, refractory and/or ceramic materials such as borides, carbides, nitrides, silicides, oxides, oxynitrides, and mixtures thereof; pyrolizable chlorosilanes, polycarbosilanes, polysilanes and other organometal polymers which pyrolyze to useful products for enhancing bonding, or their pyrolyzed products; and mixtures thereof.

119. The method of claim 116 wherein the precursor of the heat-stable carbon-containing body comprises metallic aluminium as filler, in the form of particulates, chips, turnings or ground scrap pieces, or mixtures thereof.

120. The method of claim 116 wherein the precursor of the heat-stable carbon-containing body comprises 50 to 99 weight% of particulate carbon (preferably 50 to 95%), 0 to 30 weight% of fillers and 1 to 30 weight% of the binder (preferably 5 to 30%).

121. The method of claim 120 wherein the precursor of the heat-stable carbon-containing body comprises aluminium, alumina or a mixture of aluminium and alumina as filler(s), and colloidal alumina as binder.

122. The method of claim 116 wherein the precursor layer of the aluminium-wettable refractory coating contains a particulate micropyretic reaction mixture which when ignited reacts to form at least one aluminium-wettable refractory material, mixed with pre-formed particulate aluminium-wettable refractory material and a colloidal binder.

123. The method of claim 122 wherein said precursor layer contains from 0.5 to 20 parts by weight of pre-formed particulate aluminium-wettable refractory material for 1 part by weight of the reaction mixture.

124. The method of claim 123 wherein said precursor layer contains from 1 to 8 parts by weight, preferably from 1.5 to 4 parts by weight, of pre-formed particulate aluminium-wettable refractory material for 1 part by weight of the reaction mixture.

125. The method of claim 122 wherein said reaction mixture comprises aluminium, boron oxide and titanium dioxide at least approximately in the molar ratio: 10Al : 3B₂O₃ : 3TiO₂.

126. The method of claim 116 wherein the precursor layer of the aluminium-wettable refractory coating is provided by applying pre-formed particulate refractory material in a colloid and drying.

127. The method of claim 126 wherein the pre-formed particulate refractory material in said precursor layer is a boride selected from borides of titanium, chromium, vanadium, zirconium, hafnium, niobium, tantalum, molybdenum and cerium.

128. The method of claim 127 wherein the pre-formed particulate refractory boride in said precursor layer is titanium diboride and the reaction mixture of the precursor of the heat-stable carbon-containing material reacts to produce titanium diboride.

129. The method of claim 127 wherein the pre-formed particulate refractory boride in said precursor layer has a particle size below 100 micrometers.

130. The method of claim 129 wherein the pre-formed particulate refractory boride in said precursor layer comprises particles of different sizes to optimize packing of the particles, with a particle size ratio of at least 2:1.

131. The method of claim 130 wherein the particle size ratio of the pre-formed particulate refractory boride is in the range 3:1 to 10:1.

132. The method of claim 130 wherein the pre-formed particulate refractory boride in said precursor layer has particles with sizes in the range from about 3 micrometers to about 50 micrometers.

133. The method of claim 70 wherein the particulate carbon of the precursor of the heat-stable carbon-containing body is selected from petroleum coke, metallurgical coke, anthracite, graphite, amorphous carbon, fullerene or a mixture thereof.

134. The method of claim 70 wherein said heat treatment is followed by aluminizing the aluminium-wettable refractory coating layer, preferably by placing said surface in contact with molten aluminium in the presence of a fluxing agent.

135. A method of assembling and operating an aluminium electrowinning cell containing a cryolite-based molten electrolyte to produce aluminium, said method comprising converting by heat treatment a part-manufactured component according to claim 1 to produce a fully-manufactured body consisting of a carbon based component coated with an aluminium-wettable refractory coating; placing said component in the cell so the coating of refractory material will be contacted by cryolite or the cathodically produced aluminium; dissolving and electrolysing alumina in the molten electrolyte to produce aluminium.

136. The method of claim 135, wherein the part-manufactured component is converted by heat-treatment into a fully-manufactured component before being fitted or assembled in the cell.

137. The method of claim 135, wherein the fully-manufactured component is a cathode or forms part of the cathodic cell bottom.

138. The method of claim 135, wherein the fully-manufactured component is aluminized prior to electrolysing dissolved alumina.

139. A component of an aluminium production cell, in particular a cathode or a cell lining of an electrolytic cell for the production of aluminium by the electrolysis of alumina in a molten halide electrolyte, said cell component comprising an aluminium-wettable refractory coating on a heat-stable baked carbon body, characterised in that the component is obtained by simultaneous heat treatment of a layered composite of two precursors containing the same particulate micropyretic reaction mixture and the same colloidal binder, wherein:
- the aluminium-wettable refractory coating is obtainable from a precursor layer containing a particulate micropyretic reaction mixture which when ignited reacts to form at least one aluminium-wettable refractory material, and non-carbon fillers and binders; and
- the heat-stable baked carbon-containing body is obtainable from a non-baked or part-baked precursor comprising particulate carbon compacted with the reaction mixture which when ignited reacts to form the heat-stable carbon-containing body of the fully-manufactured cell component.

140. The cell component of claim 139, which is a cathode or forms part of the cathodic cell bottom.

141. The cell component of claim 139 or 140, which is aluminized prior to use.

142. An aluminium production cell including a cell component according to any one of claims 139 to 141, which component is exposed to molten cryolite or aluminium in operation of the cell.

## Patentansprüche

1. Teilgefertigte Komponente einer Aluminiumproduktionszelle, insbesondere eine Kathode oder eine Zellenauskleidung von einer elektrolytischen Zelle für die Herstellung von Aluminium durch die Elektrolyse von Aluminiumoxid in einem geschmolzenen Halogenid-Elektrolyten, wobei die Zellenkomponente, wenn sie vollständigt gefertigt ist, eine Aluminium-benetzbare, feuerfeste Beschichtung auf einem hitzestabilen, gebrannten, Kohlenstoff-enthaltenden Körper aufweist, wobei die teilgefertigte Zellenkomponente ein geschichteter Komposit aus zwei Vorläufern ist, mit:
einer Vorläuferschicht der Aluminium-benetzbaren, feuerfesten Beschichtung, wobei die Vorläuferschicht mindestens ein Aluminium-benetzbares, feuerfestes Material in partikulärer Form oder eine partikuläre, mikropyretische Reaktionsmischung, die reagiert, wenn entzündet, um mindestens ein Aluminium-benetzbares, feuerfestes Material zu bilden, oder eine Mischung davon sowie Nicht-Kohlenstoff-Füllstoffe und Bindemittel enthält; auf
einem nicht-gebrannten oder teilweise gebrannten Vorläufer des hitzestabilen, Kohlenstoff-enthaltenden Körpers, der partikulären Kohlenstoff verdichtet mit einem hitzeumwandelbaren Bindemittel enthält, das, wenn es einer Hitzebehandlung unterworfen wird, den partikulären Kohlenstoff in dem hitzestabilen, Kohlenstoff-enthaltenden Körper der vollständig gefertigten Zellenkomponente bindet;
wobei der geschichtete Komposit in die vollständig gefertigte Zellenkomponente durch Hitzebehandlung umwandelbar ist, um die Aluminium-benetzbare, feuerfeste Beschichtung zu bilden und um gleichzeitig den Kohlenstoff-enthaltenden Körper zu binden und zu hitzestabilisieren.

2. Teilgefertigte Zellenkomponente nach Anspruch 1, bei der der Vorläufer des hitzestabilen, Kohlenstoff-enthaltenden Körpers eine verdichtete Mischung aus partikulärem Kohlenstoff, eine partikuläre, mikropyretische Reaktionsmischung, die reagiert, wenn entzündet, um mindestens ein Aluminiumbenetzbares, feuerfestes Material zu bilden, sowie ein kolloidales Bindemittel enthält.

3. Teilgefertigte Zellenkomponente nach Anspruch 2, bei der die Vorläuferschicht der Aluminium-benetzbaren, feuerfesten Beschichtung eine partikuläre, mikropyretische Reaktionsmischung enthält, die reagiert, wenn entzündet, um mindestens ein Aluminium-benetzbares, feuerfestes Material zu bilden, gemischt mit einem vorgebildeten, partikulären, Aluminium-benetzbaren, feuerfesten Material und einem kolloidalen Bindemittel.

4. Teilgefertigte Zellenkomponente nach Anspruch 3, bei der der Vorläufer des hitzestabilen, Kohlenstoff-enthaltenden Körpers und die Vorläuferschicht der Aluminium-benetzbaren, feuerfesten Beschichtung jeweils die gleiche Reaktionsmischung und das gleiche kolloidale Bindemittel enthalten.

5. Teilgefertigte Zellenkomponente nach Anspruch 4, bei der der Vorläufer des hitzestabilen, Kohlenstoff-enthaltenden Körpers von 0,5 bis 20 Gewichtsteile partikulären Kohlenstoff pro 1 Gewichtsteil der Reaktionsmischung enthält und die Vorläuferschicht von 0,5 bis 20 Gewichtsteile vorgebildetes, partikuläres, Aluminium-benetzbares, feuerfestes Material pro 1 Gewichtsteil Reaktionsmischung enthält.

6. Teilgefertigte Zellenkomponente nach Anspruch 5, bei der der Vorläufer des hitzestabilen, Kohlenstoff-enthaltenden Körpers von 1 bis 8 Gewichtsteile, bevorzugt von 1,5 bis 4 Gewichtsteile, partikulären Kohlenstoff pro 1 Gewichtsteil der Reaktionsmischung enthält, und die Vorläuferschicht von 1 bis 8 Gewichtsteile, bevorzugt von 1,5 bis 4 Gewichtsteile, vorgebildetes, partikuläres, Aluminium-benetzbares, feuerfestes Material pro 1 Gewichtsteil der Reaktionsmischung enthält.

7. Teilgefertigte Zellenkomponente nach Anspruch 4, bei der der Gewichtsanteil der Reaktionsmischung in dem Vorläufer des hitzestabilen, Kohlenstoff-enthaltenden Körpers mindestens etwa gleich dem Gewichtsanteil der Reaktionsmischung in der Vorläuferschicht ist.

8. Teilgefertigte Zellenkomponente nach Anspruch 4, bei der die Reaktionsmischung Aluminium, Boroxid und Titandioxid enthält, und zwar mindestens etwa in dem molaren Verhältnis: 10 Al : 3B₂O₃ : 3TiO₂.

9. Teilgefertigte Zellenkomponente nach Anspruch 2, bei der die Reaktionsmischung und der partikuläre Kohlenstoff des Vorläufers des hitzestabilen, Kohlenstoff-enthaltenden Körpers mit von 0,1 ml bis 1 ml, vorzugsweise von 0,15 ml bis 0,5 ml, von dem kolloidalen Bindemittel pro Gramm der Reaktionsmischung und dem partikulären Kohlenstoff gemischt sind.

10. Teilgefertigte Zellenkomponente nach Anspruch 9, bei der das kolloidale Bindemittel des Vorläufers des hitzestabilen, Kohlenstoff-enthaltenden Körpers mindestens eines von kolloidalem Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate davon sowie Oxide und Hydroxide anderer Metalle, kationische Spezies und Mischungen davon enthält.

11. Teilgefertigte Zellenkomponente nach Anspruch 3, bei der die Reaktionsmischung und das vorgebildete, partikuläre, feuerfeste Material der Vorläuferschicht mit von 0,1 ml bis 1 ml, vorzugsweise von 0,15 ml bis 0,5 ml, von dem kolloidalen Bindemittel pro Gramm der Reaktionsmischung und dem vorgebildeten, partikulären, feuerfesten Hartmaterial gemischt sind.

12. Teilgefertigte Zellenkomponente nach Anspruch 11, bei der das kolloidale Bindemittel der Vorläuferschicht mindestens eines von kolloidalem Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate davon sowie Oxide und Hydroxide anderer Metalle, kationische Spezies und Mischungen davon enthält.

13. Teilgefertigte Zellenkomponente nach den Ansprüchen 10 und 12, bei der sowohl die Vorläuferschicht der Aluminiumbenetzbaren, feuerfesten Beschichtung als auch der Vorläufer des hitzestabilen, Kohlenstoff-enthaltenden Körpers kolloidales Aluminiumoxid enthalten.

14. Teilgefertigte Zellenkomponente nach Anspruch 2, bei der die Vorläuferschicht der Aluminium-benetzbaren, feuerfesten Beschichtung vorgebildetes, partikuläres, feuerfestes Material in einem getrockneten Kolloid enthält.

15. Teilgefertigte Zellenkomponente nach Anspruch 14, bei der das vorgebildete, partikuläre, feuerfeste Material in der Vorläuferschicht ein Borid ist, ausgewählt aus den Boriden von Titan, Chrom, Vanadium, Zirkonium, Hafnium, Niob, Tantal, Molybden und Cer.

16. Teilgefertigte Zellenkomponente nach Anspruch 15, bei der das vorgebildete, partikuläre, feuerfeste Borid in der Vorläuferschicht Titandiborid ist, und die Reaktionsmischung des Vorläufers des hitzestabilen, Kohlenstoff-enthaltenden Materials reagiert, um Titandiborid zu bilden.

17. Teilgefertigte Zellenkomponente nach Anspruch 15, bei der das vorgebildete, partikuläre, feuerfeste Borid in der Vorläuferschicht eine Partikelgröße unter 100 Mikrometer hat.

18. Teilgefertigte Zellenkomponente nach Anspruch 17, bei der das vorgebildete, partikuläre, feuerfeste Borid in der Vorläuferschicht Partikel verschiedener Größen enthält, um das Packen der Partikel zu optimieren, mit einem Partikelgrößenverhältnis von mindestens 2:1.

19. Teilgefertigte Zellenkomponente nach Anspruch 18, bei der das Partikelgrößenverhältnis von dem vorgebildeten, partikulären, feuerfesten Borid in dem Bereich von 3:1 bis 10:1 liegt.

20. Zellenkomponente nach Anspruch 18, bei der das vorgebildete, partikuläre, feuerfeste Borid in der Vorläuferschicht Partikel mit Größen im Bereich von etwa 3 Mikrometer bis etwa 50 Mikrometer enthält.

21. Teilgefertigte Zellenkomponente nach Anspruch 1, bei der der Vorläufer des hitzestabilen, Kohlenstoff-enthaltenden Körpers eine verdichtete Mischung aus partikulärem Kohlenstoff mit Aluminium und mit mindestens einer Verbindung von Lithium, Aluminium, Cer, Calcium und Natrium in einem flüssigen Trägerstoff enthält, wobei die Mischung reagiert, wenn erhitzt, um ein Bindemittel zu bilden, das mindestens eines von Aluminiumcarbid, Aluminiumoxicarbid, Aluminiumnitrid und Aluminiumoxinitrid oder Mischungen davon mit metallischem Aluminium enthält.

22. Teilgefertigte Zellenkomponente nach Anspruch 21, bei der der Vorläufer des hitzestabilen, Kohlenstoff-enthaltenden Körpers eine Aluminiumverbindung enthält, die ausgewählt ist aus Aluminiumnitrat, Aluminiumkarbonat, Aluminiumhalogenid, Aluminiumborat und Aluminiumcarbid sowie Mischungen davon.

23. Teilgefertigte Zellenkomponente nach Anspruch 22, bei der der Vorläufer des hitzestabilen, Kohlenstoff-enthaltenden Körpers eine Lithiumverbindung enthält, ausgewählt aus Lithiumacetat, Lithiumkarbonat, Lithiumflorid, Lithiumchlorid, Lithiumoxalat, Lithiumnitrid, Lithiumnitrat, Lithiumformat und Lithiumaryl, Lithiumtetraborat sowie Mischungen davon.

24. Teilgefertigte Zellenkomponente nach Anspruch 22, bei der der Vorläufer des hitzestabilen, Kohlenstoff-enthaltenden Körpers 1 bis 20 Gewichtsteile von partikulärem Aluminium pro 80 bis 99 Gewichtsteile von partikulärem Kohlenstoff enthält.

25. Teilgefertigte Zellenkomponente nach Anspruch 24, bei der das partikuläre Aluminium und der partikuläre Kohlenstoff mit den Verbindungen in dem flüssigen Trägerstoff in einer Menge von 5 bis 20 ml des flüssigen Trägerstoffs pro 100 g des partikulären Aluminiums und des partikulären Kohlenstoffs gemischt sind.

26. Teilgefertigte Zellenkomponente nach Anspruch 21, bei der der flüssige Trägerstoff ein Bindemittel enthält, ausgewählt aus Methylzellulose, Polyvinylalkohol und Kolloiden, insbesondere kolloidales Aluminiumoxid.

27. Teilgefertigte Zellenkomponente nach Anspruch 26, bei der der flüssige Trägerstoff ein Kolloid von mindestens einem aus Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate davon sowie Oxide und Hydroxide anderer Metalle, kationische Spezies und Mischungen davon enthält.

28. Teilgefertigte Zellenkomponente nach Anspruch 24, bei der das partikuläre Aluminium in dem Vorläufer des hitzestabilen Kohlenstoffkörpers eine Abmessung von höchstens 44 Mikrometer (- 325 mesh) hat.

29. Teilgefertigte Zellenkomponente nach Anspruch 24, bei der das partikuläre Aluminium in dem Vorläufer des hitzestabilen Kohlenstoffkörpers naßgemahlenes Aluminium ist, das von Abfallfolie stammt.

30. Teilgefertigte Zellenkomponente nach Anspruch 21, bei der die Vorläuferschicht der Aluminium-benetzbaren, feuerfesten Beschichtung eine partikuläre, mikropyretische Reaktionsmischung enthält, die reagiert, wenn entzündet, um mindestens ein Aluminium-benetzbares, feuerfestes Material zu bilden, gemischt mit einem vorgebildeten, partikulären, Aluminium-benetzbaren, feuerfesten Material und einem kolloidalen Bindemittel.

31. Teilgefertigte Zellenkomponente nach Anspruch 30, bei der die Vorläuferschicht von 0,5 bis 20 Gewichtsteile vorgebildetes, partikuläres, Aluminium-benetzbares, feuerfestes Material pro 1 Gewichtsteil der Reaktionsmischung enthält.

32. Teilgefertigte Zellenkomponente nach Anspruch 31, bei der die Vorläuferschicht von 1 bis 8 Gewichtsteile, vorzugsweise von 1,5 bis 4 Gewichtsteile, vorgebildetes, partikuläres, Aluminium-benetzbares, feuerfestes Material pro 1 Gewichtsteil der Reaktionsmischung enthält.

33. Teilgefertigte Zellenkomponente nach Anspruch 30, bei der die Reaktionsmischung Aluminium, Boroxid, Titandioxid und Titandiborid als Füllstoff enthält, und zwar mindestens etwa in dem molaren Verhältnis: 10A1 : 3B₂O₃ : 3TiO₂ : bis zu 20TiB₂.

34. Teilgefertigte Zellenkomponente nach Anspruch 21, bei der die Vorläuferschicht der Aluminium-benetzbaren, feuerfesten Beschichtung vorgebildetes, partikuläres, feuerfestes Material in einem getrockneten Kolloid enthält.

35. Teilgefertigte Zellenkomponente nach Anspruch 34, bei der das vorgebildete, partikuläre, feuerfeste Material in der Vorläuferschicht ein Borid ist, ausgewählt aus Boriden von Titan, Chrom, Vanadium, Zirkonium, Hafnium, Niob, Tantal, Molybden und Cer.

36. Teilgefertigte Zellenkomponente nach Anspruch 35, bei der das vorgebildete, partikuläre, feuerfeste Borid in der Vorläuferschicht Titandiborid ist und die Reaktionsmischung des Vorläufers des hitzestabilen, Kohlenstoff-enthaltenden Materials reagiert, um Titandiborid zu bilden.

37. Teilgefertigte Zellenkomponente nach Anspruch 35, bei der das vorgebildete, partikuläre, feuerfeste Borid eine Partikelgröße von unter 100 Mikrometer hat.

38. Teilgefertigte Zellenkomponente nach Anspruch 37, bei der das vorgebildete, partikuläre, feuerfeste Borid Partikel verschiedener Größen enthält, um das Packen der Partikel zu optimieren, mit einem Partikelgrößenverhältnis von mindestens 2:1.

39. Teilgefertigte Zellenkomponente nach Anspruch 38, bei der das Partikelgrößenverhältnis des vorgebildeten, partikulären, feuerfesten Borids in dem Bereich 3:1 bis 10:1 liegt.

40. Teilgefertigte Zellenkomponente nach Anspruch 39, bei der das vorgebildete, partikuläre, feuerfeste Borid Partikel mit Größen im Bereich von etwa 3 Mikrometer bis etwa 50 Mikrometer enthält.

41. Teilgefertigte Zellenkomponente nach Anspruch 1, bei der der Vorläufer des hitzestabilen, Kohlenstoff-enthaltenden Körpers eine verdichtete Mischung aus partikulärem Kohlenstoff mit einem nicht-kohlenstoffhaltigen, nicht-verunreinigenden, kolloidalen Bindemittel und wahlweise einem oder mehreren Füllstoffen enthält, wobei das Bindemittel eine Suspension aus einem oder mehreren Kolloiden ist oder von einem oder mehreren kolloidalen Vorläufern oder kolloidalen Reagenzien stammt, wahlweise mit einem oder mehreren Chelatbildnern.

42. Teilgefertigte Zellenkomponente nach Anspruch 41, bei der das Bindemittel eine Suspension ist, die mindestens eines von kolloidalem Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate davon sowie Oxide und Hydroxide anderer Metalle, kationische Spezies und Mischungen davon enthält.

43. Teilgefertigte Zellenkomponente nach Anspruch 41, bei der der Vorläufer des hitzestabilen, Kohlenstoff-enthaltenden Körpers einen oder mehrere Füllstoffe enthält, die ausgewählt sind aus: Bindungsverstärkende Materialien, wie Methylzellulose, partikuläres Aluminiumoxid oder Harnstoff; metallische, intermetallische, semimetallische, polymerische, feuerfeste und/oder keramische Materialien, wie Boride, Carbide, Nitride, Silicide, Oxide, Oxinitride, sowie Mischungen davon; pyrolisierbare Chlorosilane, Polycarbosilane, Polysilane und andere organometallische Polymere, die zu brauchbaren Produkten zur Bindungsverstärkung pyrolisieren, oder deren pyrolisierte Produkte; sowie Mischungen davon.

44. Teilgefertigte Zellenkomponente nach Anspruch 41, bei der der Vorläufer des hitzestabilen, Kohlenstoff-enthaltenden Körpers metallisches Aluminium als Füllstoff in Form von Feststoffteilchen, Splittern, Drehspänen oder geschliffenen Abfallstücken oder Mischungen davon enthält.

45. Teilgefertigte Zellenkomponente nach Anspruch 41, bei der der Vorläufer des hitzestabilen, Kohlenstoff-enthaltenden Körpers 50 bis 99 Gew.% partikulären Kohlenstoff (vorzugsweise 50 bis 95 %), 0 bis 30 Gew.% Füllstoff und 1 bis 30 Gew.% Bindemittel (vorzugsweise 5 bis 30 %) enthält.

46. Teilgefertigte Zellenkomponente nach Anspruch 45, bei der der Vorläufer des hitzestabilen, Kohlenstoff-enthaltenden Körpers Aluminium, Aluminiumoxid oder eine Mischung von Aluminium und Aluminiumoxid als Füllstoff(e) und kolloidales Aluminiumoxid als Bindemittel enthält.

47. Teilgefertigte Zellenkomponente nach Anspruch 41, bei der die Vorläuferschicht der Aluminium-benetzbaren, feuerfesten Beschichtung eine partikuläre, mikropyretische Reaktionsmischung enthält, die reagiert, wenn entzündet, um mindestens ein Aluminium-benetzbares, feuerfestes Material zu bilden, gemischt mit einem vorgebildeten, partikulären, Aluminium-benetzbaren, feuerfesten Material und einem kolloidalen Bindemittel.

48. Teilgefertigte Zellenkomponente nach Anspruch 47, bei der die Vorläuferschicht von 0,5 bis 20 Gewichtsteile vorgebildetes, partikuläres, Aluminium-benetzbares, feuerfestes Material pro 1 Gewichtsteil der Reaktionsmischung enthält.

49. Teilgefertigte Zellenkomponente nach Anspruch 48, bei der die Vorläuferschicht von 1 bis 8 Gewichtsteile, vorzugsweise von 1,5 bis 4 Gewichtsteile, vorgebildetes, partikuläres, Aluminium-benetzbares, feuerfestes Material pro 1 Gewichtsteil der Reaktionsmischung enthält.

50. Teilgefertigte Zellenkomponente nach Anspruch 47, bei der die Reaktionsmischung Aluminium, Boroxid und Titandioxid enthält, und zwar mindestens etwa in dem molaren Verhältnis: 10Al : 3B₂O₃ : 3TiO₂.

51. Teilgefertigte Zellenkomponente nach Anspruch 41, bei der die Vorläuferschicht der Aluminium-benetzbaren, feuerfesten Beschichtung vorgebildetes, partikuläres, feuerfestes Material in einem getrockneten Kolloid enthält.

52. Teilgefertigte Zellenkomponente nach Anspruch 51, bei der das vorgebildete, partikuläre, feuerfeste Material in der Vorläuferschicht ein Borid ist, ausgewählt aus Boriden von Titan, Chrom, Vanadium, Zirkonium, Hafnium, Niob, Tantal, Molybden und Cer.

53. Teilgefertigte Zellenkomponente nach Anspruch 52, bei der das vorgebildete, partikuläre, feuerfeste Borid in der Vorläuferschicht Titandiborid ist, und die Reaktionsmischung des Vorläufers des hitzestabilen, Kohlenstoff-enthaltenden Materials reagiert, um Titandiborid zu bilden.

54. Teilgefertigte Zellenkomponente nach Anspruch 52, bei der das vorgebildete, partikuläre, feuerfeste Borid in der Vorläuferschicht eine Partikelgröße von unter 100 Mikrometer hat.

55. Teilgefertigte Zellenkomponente nach Anspruch 54, bei der das vorgebildete, partikuläre, feuerfeste Borid in der Vorläuferschicht Partikel verschiedener Größen enthält, um das Packen der Partikel zu optimieren, mit einem Partikelgrößenverhältnis von mindestens 2:1.

56. Teilgefertigte Zellenkomponente nach Anspruch 55, bei der das Partikelgrößenverhältnis des vorgebildeten, partikulären, feuerfesten Borids im Bereich 3:1 zu 10:1 liegt.

57. Teilgefertigte Zellenkomponente nach Anspruch 55, bei der das vorgebildete, partikuläre, feuerfeste Borid in der Vorläuferschicht Partikel mit Größen im Bereich von etwa 3 Mikrometer bis etwa 50 Mikrometer enthält.

58. Teilgefertigte Zellenkomponente nach Anspruch 1, bei der der partikuläre Kohlenstoff des Vorläufers des hitzestabilen, Kohlenstoff-enthaltenden Körpers ausgewählt ist aus Petrolkoks, Hüttenkoks, Anthrazit, Graphit, amorphem Kohlenstoff, Fulleren oder einer Mischung davon.

59. Teilgefertigte Zellenkomponente nach Anspruch 58, bei der die Größe des partikulären Kohlenstoffs bis zu 40 mm beträgt, vorzugsweise zwischen 1 Mikrometer und 30 mm.

60. Teilgefertigte Zellenkomponente nach Anspruch 59, bei der der partikuläre Kohlenstoff zwischen 5 % und 40 % Partikel enthält, die eine Größe von unter 0,2 mm haben.

61. Teilgefertigte Zellenkomponente nach Anspruch 58, bei der mindestens ein Teil des partikulären Kohlenstoffs faserförmig ist.

62. Teilgefertigte Zellenkomponente nach Anspruch 1, bei der der resultierende, hitzestabile, Kohlenstoff-enthaltende Körper mindestens 50 Gew.% Kohlenstoff enthält.

63. Teilgefertigte Zellenkomponente nach Anspruch 62, bei der der resultierende, hitzestabile, Kohlenstoff-enthaltende Körper von 70 bis 85 Gew.% Kohlenstoff enthält.

64. Teilgefertigte Zellenkomponente nach Anspruch 1, bei der der Vorläufer des hitzestabilen, Kohlenstoff-enthaltenden Körpers einen oder mehrere Füllstoffe enthält, die ausgewählt sind aus: Bindungsverstärkende Materialien, wie Methylzellulose, partikuläres Aluminium oder Harnstoffe; metallische, inter-metallische, semimetallische, polymerische, feuerfeste und/oder keramische Materialien, wie Boride, Carbide, Nitride, Silicide, Oxide, Oxinitride und Mischungen davon; pyrolisierbare Chlorosilane, Polycarbosilane, Polysilane und andere organometallische Polymere, die zu brauchbaren Produkten zur Bindungsverstärkung pyrolisieren, oder deren pyrolisierte Produkte; und Mischungen davon.

65. Teilgefertigte Zellenkomponente nach Anspruch 1, bei der der Vorläufer des hitzestabilen, Kohlenstoff-enthaltenden Körpers eine verdichtete Mischung aus partikulärem Kohlenstoff mit Pech als einem heißhärtenden, Kohlenstoffhaltigen Bindemittel enthält.

66. Teilgefertigte Zellenkomponente nach Anspruch 65, bei der der Vorläufer des hitzestabilen, Kohlenstoff-enthaltenden Körpers eine verdichtete Mischung aus partikulärem Anthrazit, Hüttenkoks, Graphit mit Pech enthält.

67. Teilgefertigte Zellenkomponente nach Anspruch 65, bei der der Vorläufer des hitzestabilen, Kohlenstoff-enthaltenden Körpers ferner ein nicht-kohlenstoffhaltiges kolloidales Bindemittel enthält.

68. Teilgefertigte Zellenkomponente nach Anspruch 65, bei der die Vorläuferschicht der Aluminium-benetzbaren, feuerfesten Beschichtung eine partikuläre, mikropyretische Reaktionsmischung enthält, die reagiert, wenn entzündet, um mindestens ein Aluminium-benetzbares, feuerfestes Material zu bilden, gemischt mit einem vorgebildeten, partikulären, Aluminium-benetzbaren, feuerfesten Material und einem kolloidalen Bindemittel.

69. Teilgefertigte Zellenkomponente nach Anspruch 65, bei der die Vorläuferschicht der Aluminium-benetzbaren, feuerfesten Beschichtung ein vorgebildetes, partikuläres, feuerfestes Material in einem getrockneten Kolloid enthält.

70. Verfahren zur Herstellung einer Komponente einer Aluminium-Produktionszelle, insbesondere einer Kathode oder einer Zellenauskleidung einer elektrolytischen Zelle für die Herstellung von Aluminium durch die Elektrolyse von Aluminiumoxid in einem geschmolzenen Halogenid-Elektrolyten, wobei die Zellenkomponente eine Aluminium-benetzbare, feuerfeste Beschichtungsschicht auf einem hitzestabilen, gebrannten, Kohlenstoff-enthaltenden Körper aufweist, wobei das Verfahren umfaßt:
Bereitstellen einer teilgefertigten Zellenkomponente, die ein geschichteter Komposit aus zwei Vorläufern ist, wie in Anspruch 1 definiert; und
Umwandeln des geschichteten Komposit in die vollständig gefertigte Zellenkomponente durch Hitzebehandlung, um die Aluminium-benetzbare, feuerfeste Beschichtung zu bilden, und um gleichzeitig den Kohlenstoff-enthaltenden Körper zu binden und zu hitzestabilisieren.

71. Verfahren nach Anspruch 70, bei dem der Vorläufer des hitzestabilen, Kohlenstoff-enthaltenden Körpers durch Mischen von partikulärem Kohlenstoff, einer partikulären, mikropyretischen Reaktionsmischung, die reagiert, wenn entzündet, um mindestens ein Aluminium-benetzbares, feuerfestes Material zu bilden, und einem kolloidalen Bindemittel und durch Verdichten dieser Mischung bereitgestellt wird.

72. Verfahren nach Anspruch 71, bei dem die Vorläuferschicht der Aluminium-benetzbaren, feuerfesten Beschichtung durch Mischen einer partikulären, mikropyretischen Reaktionsmischung, die reagiert, wenn entzündet, um mindestens ein Aluminium-benetzbares, feuerfestes Material zu bilden, einem vorgebildeten, partikulären, Aluminium-benetzbaren, feuerfesten Material und einem kolloidalen Bindemittel und durch Verdichten der Mischung bereitgestellt wird, und bei dem der geschichtete Komposit schnell aufgeheizt wird, um beide Reaktionsmischungen im wesentlichen gleichzeitig zu entzünden.

73. Verfahren nach Anspruch 71, bei dem eine Vorläuferschicht der Aluminium-benetzbaren, feuerfesten Beschichtung und ein Vorläufer des hitzestabilen, Kohlenstoff-enthaltenden Körpers bereitgestellt werden, wobei jeder die gleiche Reaktionsmischung und das gleiche kolloidale Bindemittel enthält.

74. Verfahren nach Anspruch 73, bei dem der Vorläufer des hitzestabilen, gebrannten, Kohlenstoff-enthaltenden Körpers durch Mischen von 0,5 bis 20 Gewichtsteilen des partikulären Kohlenstoffs mit 1 Gewichtsteil der Reaktionsmischung gebildet wird, und bei dem die Vorläuferschicht durch Mischen von 0,5 bis 20 Gewichtsteilen des vorgebildeten, partikulären, Aluminium-benetzbaren, feuerfesten Materials mit 1 Gewichtsteil der Reaktionsmischung gebildet wird.

75. Verfahren nach Anspruch 74, bei dem der Vorläufer des hitzestabilen, Kohlenstoff-enthaltenden Körpers durch Mischen von 1 bis 8 Gewichtsteilen, vorzugsweise von 1,5 bis 4 Gewichtsteilen, des partikulären Kohlenstoffs pro 1 Gewichtsteil Reaktionsmischung gebildet wird, und bei dem die Vorläuferschicht durch Mischen von 1 bis 8 Gewichtsteilen, vorzugsweise von 1,5 bis 4 Gewichtsteilen, des vorgebildeten, partikulären, Aluminium-benetzbaren, feuerfesten Materials mit 1 Gewichtsteil der Reaktionsmischung gebildet wird.

76. Verfahren nach Anspruch 74, bei dem der Gewichtsanteil der Reaktionsmischung in dem Vorläufer des hitzestabilen, Kohlenstoff-enthaltenden Körpers mindestens etwa gleich dem Gewichtsanteil der Reaktionsmischung in der Vorläuferschicht ist.

77. Verfahren nach Anspruch 73, bei dem die Reaktionsmischung Aluminium, Boroxid und Titandioxid enthält, und zwar mindestens etwa in dem molaren Verhältnis: 10A1 : 3B₂O₃ : 3TiO₂.

78. Verfahren nach Anspruch 70, bei dem der partikuläre Kohlenstoff des Vorläufers des hitzestabilen, Kohlenstoff-enthaltenden Körpers ausgewählt ist aus Petrolkoks, Hüttenkoks, Anthrazit, Graphit, amorphem Kohlenstoff, Fulleren oder einer Mischung davon.

79. Verfahren nach Anspruch 78, bei dem die Größe des partikulären Kohlenstoffs bis zu 40 mm beträgt, vorzugsweise zwischen 1 Mikrometer und 30 mm.

80. Verfahren nach Anspruch 79, bei dem der partikuläre Kohlenstoff zwischen 5 % und 40 % Partikel enthält, die eine Größe von unter 0,2 mm haben.

81. Verfahren nach Anspruch 78, bei dem mindestens ein Teil des partikulären Kohlenstoffs faserförmig ist.

82. Verfahren nach Anspruch 70, bei dem der resultierende hitzestabile, Kohlenstoff-enthaltende Körper mindestens 50 Gew.% Kohlenstoff enthält.

83. Verfahren nach Anspruch 82, bei dem der resultierende hitzestabile, Kohlenstoff-enthaltende Körper von 70 bis 85 Gew.% Kohlenstoff enthält.

84. Verfahren nach Anspruch 71, bei dem die Reaktionsmischung und der partikuläre Kohlenstoff des Vorläufers des hitzestabilen, Kohlenstoff-enthaltenden Körpers mit von 0,1 ml bis 1 ml, vorzugsweise von 0,15 ml bis 0,5 ml, kolloidalem Bindemittel pro Gramm der Reaktionsmischung und dem partikulären Kohlenstoff gemischt werden.

85. Verfahren nach Anspruch 84, bei dem das kolloidale Bindemittel des Vorläufers des hitzestabilen, Kohlenstoff-enthaltenden Körpers mindestens eines von kolloidalem Aluminiumoxid, Siliciumdioxid, Yttriumoxid, Ceroxid, Thoriumdioxid, Zirkoniumdioxid, Magnesiumoxid und Lithiumoxid und Hydroxide, Acetate und Formate davon sowie Oxide und Hydroxide anderer Metalle, kationische Spezies und Mischung davon enthält.

86. Verfahren nach Anspruch 72, bei dem die Reaktionsmischung und das vorgebildete, partikuläre, feuerfeste Material der Vorläuferschicht mit von 0,1 ml bis 1 ml, vorzugsweise von 0,15 ml bis 0,5 ml, kolloidalem Bindemittel pro Gramm der Reaktionsmischung und dem vorgebildeten, partikulären, feuerfesten Material gemischt werden.

87. Verfahren nach Anspruch 86, bei dem das kolloidale Bindemittel der Vorläuferschicht mindestens eines von kolloidalem Aluminiumoxid, Siliciumdioxid, Yttriumoxid, Ceroxid, Thoriumdioxid, Zirkoniumdioxid und Magnesiumoxid, Lithiumoxid und Hydroxide, Acetate und Formate davon sowie Oxide und Hydroxide anderer Metalle, kationische Spezies und Mischungen davon enthält.

88. Verfahren nach Ansprüchen 85 und 87, bei dem sowohl die Vorläuferschicht der Aluminium-benetzbaren, feuerfesten Beschichtung als auch der Vorläufer des hitzestabilen, Kohlenstoff-enthaltenden Körpers kolloidales Aluminiumoxid enthalten.

89. Verfahren nach Anspruch 71, bei dem die Vorläuferschicht der Aluminium-benetzbaren, feuerfesten Beschichtung durch Zugeben eines vorgebildeten, partikulären, feuerfesten Materials in ein Kolloid und Trocknen bereitgestellt wird, wobei das vorgebildete, partikuläre, feuerfeste Material durch die Hitzebehandlung konsolidiert wird.

90. Verfahren nach Anspruch 89, bei dem das vorgebildete, partikuläre, feuerfeste Material in der Vorläuferschicht ein Borid ist, ausgewählt aus Boriden von Titan, Chrom, Vanadium, Zirkonium, Hafnium, Niob, Tantal, Molybden und Cer.

91. Verfahren nach Anspruch 90, bei dem das vorgebildete, partikuläre, feuerfeste Borid in der Vorläuferschicht Titandiborid ist, und die Reaktionsmischung des Vorläufers des hitzestabilen, Kohlenstoff-enthaltenden Materials reagiert, um Titandiborid herzustellen.

92. Verfahren nach Anspruch 90, bei dem das vorgebildete, partikuläre, feuerfeste Borid in der Vorläuferschicht eine Partikelgröße von unter 100 Mikrometer hat.

93. Verfahren nach Anspruch 92, bei dem das vorgebildete, partikuläre, feuerfeste Borid in der Vorläuferschicht Partikel verschiedener Größen enthält, um das Packen der Partikel zu optimieren, mit einem Partikelgrößenverhältnis von mindestens 2:1.

94. Verfahren nach Anspruch 93, bei dem das Partikelgrößenverhältnis des vorgebildeten, partikulären, feuerfesten Borids im Bereich von 3:1 bis 10:1 liegt.

95. Verfahren nach Anspruch 93, bei dem das vorgebildete, partikuläre, feuerfeste Borid in der Vorläuferschicht Partikel mit Größen im Bereich von etwa 3 Mikrometer bis etwa 50 Mikrometer enthält.

96. Verfahren nach Anspruch 70, bei dem der Vorläufer des hitzestabilen, Kohlenstoff-enthaltenden Körpers durch Verdichten einer Mischung aus partikulärem Kohlenstoff mit Aluminium und mit mindestens einer Verbindung von Lithium, Aluminium, Cer, Calcium und Natrium in einem flüssigen Trägerstoff bereitgestellt wird, wobei die Mischung reagiert, wenn erhitzt, um ein Bindemittel zu bilden, das mindestens eines von Aluminiumcarbid, Aluminiumoxicarbid, Aluminiumnitrid und Aluminiumoxidnitrid oder Mischungen davon mit metallischem Aluminium enthält.

97. Verfahren nach Anspruch 96, bei dem der Vorläufer des hitzestabilen, Kohlenstoff-enthaltenden Körpers eine Aluminiumverbindung enthält, ausgewählt aus Aluminiumnitrat, Aluminiumcarbonat, Aluminiumhalogenid, Aluminiumborat und Aluminiumcarbid sowie Mischungen davon.

98. Verfahren nach Anspruch 97, bei dem der Vorläufer des hitzestabilen, Kohlenstoff-enthaltenden Körpers eine Lithiumverbindung enthält, ausgewählt aus Lithiumacetat, Lithiumcarbonat, Lithiumflorid, Lithiumchlorid, Lithiumoxalat, und Lithiumnitrid, Lithiumnitrat, Lithiumformat und Lithiumaryl, Lithiumtetraborat sowie Mischungen davon.

99. Verfahren nach Anspruch 97, bei dem der Vorläufer des hitzestabilen, Kohlenstoff-enthaltenden Körpers 1 bis 20 Gewichtsteile von partikulärem Aluminium pro 80 bis 99 Gewichtsteile von partikulärem Kohlenstoff enthält.

100. Verfahren nach Anspruch 99, bei dem das partikuläre Aluminium und der partikuläre Kohlenstoff mit den Verbindungen in dem flüssigen Trägerstoff in einer Menge von 5 bis 20 ml des flüssigen Trägerstoffs pro 100 Gramm des partikulären Aluminiums und des partikulären Kohlenstoffs gemischt werden.

101. Verfahren nach Anspruch 96, bei dem der flüssige Trägerstoff ein Bindemittel enthält, ausgewählt aus Methylzellulose, Polyvinyl-Alkohol und Kolloiden, insbesondere kolloidales Aluminiumoxid.

102. Verfahren nach Anspruch 101, bei dem der flüssige Trägerstoff ein Kolloid von mindestens einem aus Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate sowie Oxide und Hydroxide anderer Metalle, kationische Spezies und Mischungen davon enthält.

103. Verfahren nach Anspruch 99, bei dem das partikuläre Aluminium in dem Vorläufer des hitzestabilen Kohlenstoffkörpers einen Durchmesser von höchstens 44 Mikrometer (- 325 mesh) hat.

104. Verfahren nach Anspruch 99, bei dem das partikuläre Aluminium in dem Vorläufer des hitzestabilen Kohlenstoffkörpers naßgemahlenes Aluminium ist, das von Abfallfolie stammt.

105. Verfahren nach Anspruch 96, bei dem die Vorläuferschicht der Aluminium-benetzbaren, feuerfesten Beschichtung eine partikuläre, mikropyretische Reaktionsmischung enthält, die reagiert, wenn entzündet, um mindestens ein Aluminiumbenetzbares, feuerfestes Material zu bilden, gemischt mit einem vorgebildeten, partikulären, Aluminium-benetzbaren, feuerfesten Material und einem kolloidalen Bindemittel.

106. Verfahren nach Anspruch 105, bei dem die Vorläuferschicht von 0,5 bis 20 Gewichtsteile vorgebildetes, partikuläres, Aluminium-benetzbares, feuerfestes Material pro 1 Gewichtsteil der Reaktionsmischung enthält.

107. Verfahren nach Anspruch 106, bei dem die Vorläuferschicht von 1 bis 8 Gewichtsteile, vorzugsweise von 1,5 bis 4 Gewichtsteile, vorgebildetes, partikuläres, Aluminiumbenetzbares, feuerfestes Material pro 1 Gewichtsteil der Reaktionsmischung enthält.

108. Verfahren nach Anspruch 105, bei dem die Reaktionsmischung Aluminium, Boroxid, Titandioxid, und Titandiborid als Füllstoff enthält, mindestens etwa in dem molaren Verhältnis: 10Al : 3B₂O₃ : 3TiO₂ bis zu 20TiB₂.

109. Verfahren nach Anspruch 96, bei dem die Vorläuferschicht der Aluminium-benetzbaren, feuerfesten Beschichtung durch Zugeben eines vorgebildeten, partikulären, feuerfesten Materials in ein Kolloid und Trocknen bereitgestellt wird.

110. Verfahren nach Anspruch 109, bei dem das vorgebildete, partikuläre, feuerfeste Material in der Vorläuferschicht ein Borid ist, ausgewählt aus Boriden von Titan, Chrom, Vanadium, Zirkonium, Hafnium, Niob, Tantal, Molybden und Cer.

111. Verfahren nach Anspruch 110, bei dem das vorgebildete, partikuläre, feuerfeste Borid in der Vorläuferschicht Titandiborid ist, und die Reaktionsmischung des Vorläufers des hitzestabilen, Kohlenstoff-enthaltenden Materials reagiert, um Titandiborid zu bilden.

112. Verfahren nach Anspruch 110, bei dem das vorgebildete, partikuläre, feuerfeste Borid eine Partikelgröße von unter 100 Mikrometer hat.

113. Verfahren nach Anspruch 112, bei dem das vorgebildete, partikuläre, feuerfeste Borid Partikel verschiedener Größen enthält, um das Packen der Partikel zu optimieren, mit einem Partikelgrößenverhältnis von mindestens 2:1.

114. Verfahren nach Anspruch 113, bei dem das Partikelgrößenverhältnis des vorgebildeten, partikulären, feuerfesten Borids in dem Bereich von 3:1 bis 10:1 liegt.

115. Verfahren nach Anspruch 114, bei dem das vorgebildete, partikuläre, feuerfeste Borid Partikel mit Größen in dem Bereich von etwa 3 Mikrometer bis etwa 50 Mikrometer enthält.

116. Verfahren nach Anspruch 70, bei dem der Vorläufer des hitzestabilen, Kohlenstoff-enthaltenden Körpers eine verdichtete Mischung aus partikulärem Kohlenstoff mit einem nicht-kohlenstoffenthaltenden, nicht-verunreinigenden, kolloidalen Bindemittel und gegebenenfalls mit einem oder mehreren Füllstoffen enthält, wobei das Bindemittel eine Suspension aus einem oder mehreren Kolloiden ist oder von einem oder mehreren kolloidalen Vorläufern oder kolloidalen Reagenzien stammt, gegebenenfalls mit einem oder mehreren Chelatbildnern.

117. Verfahren nach Anspruch 116, bei dem das Bindemittel eine Suspension ist, die mindestens eines von kolloidalem Aluminiumoxid, Siliciumdioxid, Yttriumoxid, Ceroxid, Thoriumdioxid, Zirkoniumdioxid, Magnesiumoxid, Lithiumoxid und Hydroxide, Acetate und Formate davon sowie Oxide und Hydroxide anderer Metalle, kationische Spezies und Mischungen davon enthält.

118. Verfahren nach Anspruch 116, bei dem der Vorläufer des hitzestabilen, Kohlenstoff-enthaltenden Körpers einen oder mehrere Füllstoffe enthält, die ausgewählt sind aus: Bindungsverstärkende Materialien, wie Methylcellulose, partikuläres Aluminium oder Harnstoff; metallische, intermetallische, semimetallische, polymerische, feuerfeste und/oder keramische Materialien, wie Boride, Carbide, Nitride, Silicide, Oxide, Oxinitride und Mischungen davon; pyrolisierbare Chlorosilane, Polycarbosilane, Polysilane und andere organometallische Polymere, die zu brauchbaren Produkten zur Bindungsverstärkung pyrolisieren, oder deren pyrolisierte Produkte; und Mischungen davon.

119. Verfahren nach Anspruch 116, bei dem der Vorläufer des hitzestabilen, Kohlenstoff-enthaltenden Körpers metallisches Aluminium als Füllstoff in Form von Feststoffteilchen, Splittern, Drehspänen oder geschliffenen Abfallstücken oder Mischungen davon enthält.

120. Verfahren nach Anspruch 116, bei dem der Vorläufer des hitzestabilen, Kohlenstoff-enthaltenden Körpers 50 bis 99 Gew.% partikulären Kohlenstoff (vorzugsweise 50 bis 95 %), 0 bis 30 Gew.% Füllstoff und 1 bis 30 Gew.% Bindemittel (vorzugsweise 5 bis 30 %) enthält.

121. Verfahren nach Anspruch 120, bei dem der Vorläufer des hitzestabilen, Kohlenstoff-enthaltenden Körpers Aluminium, Aluminiumoxid oder eine Mischung von Aluminium und Aluminiumoxid als Füllstoff(e) und kolloidales Aluminiumoxid als Bindemittel enthält.

122. Verfahren nach Anspruch 116, bei der die Vorläuferschicht der Aluminium-benetzbaren, feuerfesten Beschichtung eine partikuläre, mikropyretische Reaktionsmischung enthält, die reagiert, wenn entzündet, um mindestens ein Aluminiumbenetzbares, feuerfestes Material zu bilden, gemischt mit einem vorgebildeten, partikulären, Aluminium-benetzbaren, feuerfesten Material und einem kolloidalen Bindemittel.

123. Verfahren nach Anspruch 122, bei dem die Vorläuferschicht von 0,5 bis 20 Gewichtsteile vorgebildetes, partikuläres, Aluminium-benetzbares, feuerfestes Material pro 1 Gewichtsteil der Reaktionsmischung enthält.

124. Verfahren nach Anspruch 123, bei dem die Vorläuferschicht von 1 bis 8 Gewichtsteile, vorzugsweise von 1,5 bis 4 Gewichtsteile, vorgebildetes, partikuläres, Aluminiumbenetzbares, feuerfestes Material pro 1 Gewichtsteil der Reaktionsmischung enthält.

125. Verfahren nach Anspruch 122, bei dem die Reaktionsmischung Aluminium, Boroxid und Titandioxid enthält, mindestens etwa in dem molaren Verhältnis: 10Al : 3B₂O₃ : 3TiO₂.

126. Verfahren nach Anspruch 116, bei dem die Vorläuferschicht der Aluminium-benetzbaren, feuerfesten Beschichtung durch Zugeben eines vorgebildeten, partikulären, feuerfesten Materials in ein Kolloid und Trocknen bereitgestellt wird.

127. Verfahren nach Anspruch 126, bei dem das vorgebildete, partikuläre, feuerfeste Material in der Vorläuferschicht ein Borid ist, ausgewählt aus Boriden von Titan, Chrom, Vanadium, Zirkonium, Hafnium, Niob, Tantal, Molybden und Cer.

128. Verfahren nach Anspruch 127, bei dem das vorgebildete, partikuläre, feuerfeste Borid in der Vorläuferschicht Titandiborid ist und die Reaktionsmischung des Vorläufers des hitzestabilen, Kohlenstoff-enthaltenden Materials reagiert, um Titandiborid zu bilden.

129. Verfahren nach Anspruch 127, bei dem das vorgebildete, partikuläre, feuerfeste Borid in der Vorläuferschicht eine Partikelgröße von unter 100 Mikrometer hat.

130. Verfahren nach Anspruch 129, bei dem das vorgebildete, partikuläre, feuerfeste Borid in der Vorläuferschicht Partikel verschiedener Größen enthält, um das Packen der Partikel zu optimieren, mit einem Partikelgrößenverhältnis von mindestens 2:1.

131. Verfahren nach Anspruch 130, bei dem das Partikelgrößenverhältnis des vorgebildeten, partikulären, feuerfesten Borids in dem Bereich von 3:1 bis 10:1 liegt.

132. Verfahren nach Anspruch 130, bei dem das vorgebildete, partikuläre, feuerfeste Borid in der Vorläuferschicht Partikel mit Größen in dem Bereich von 3 Mikrometer bis etwa 50 Mikrometer enthält.

133. Verfahren nach Anspruch 70, bei dem der partikuläre Kohlenstoff des Vorläufers des hitzestabilen, Kohlenstoff-enthaltenden Körpers ausgewählt ist aus Petrolkoks, Hüttenkoks, Anthrazit, Graphit, amorphem Kohlenstoff, Fulleren oder einer Mischung davon.

134. Verfahren nach Anspruch 70, bei dem auf die Hitzebehandlung das Aluminisieren der Aluminium-benetzbaren, feuerfesten Beschichtungsschicht folgt, indem vorzugsweise die Oberfläche mit geschmolzenem Aluminium in Kontakt gebracht wird, in der Gegenwart eines Flußmittels.

135. Verfahren zum Zusammenbauen und Betreiben einer Aluminium-Elektrogewinnungszelle, die einen auf Kryolit basierenden, geschmolzenen Elektrolyten enthält, um Aluminium herzustellen, wobei das Verfahren umfaßt: Umwandeln einer teilgefertigten Komponente durch Hitzebehandlung nach Anspruchl, um einen vollständig gefertigten Körper herzustellen, der eine auf Kohlenstoff basierende Komponente enthält, die mit einer Aluminium-benetzbaren, feuerfesten Beschichtung beschichtet ist; Plazieren der Komponente in der Zelle, so daß die Beschichtung aus feuerfestem Material mit dem Kryolit oder dem kathodisch hergestellte Aluminium in Kontakt kommt; Auflösen und Elektrolysieren des Aluminiumoxids in dem geschmolzenen Elektrolyten, um Aluminium herzustellen.

136. Verfahren nach Anspruch 135, bei dem die teilgefertigte Komponente durch Hitzebehandlung in eine vollständig gefertigte Komponente umgewandelt wird, bevor sie in die Zelle eingepaßt oder eingebaut wird.

137. Verfahren nach Anspruch 135, bei dem die vollständig gefertigte Komponente eine Kathode ist, oder einen Teil des kathodischen Zellenbodens bildet.

138. Verfahren nach Anspruch 135, bei dem die vollständig gefertigte Komponente vor der Elektrolyse des gelösten Aluminiumoxids aluminisiert wird.

139. Komponente einer Aluminiumproduktionszelle, insbesondere eine Kathode oder eine Zellenauskleidung von einer elektrolytischen Zelle für die Herstellung von Aluminium durch die Elektrolyse von Aluminiumoxid in einem geschmolzenen Halogenid-Elektrolyten, wobei die Zellenkomponente eine Aluminium-benetzbare, feuerfeste Beschichtung auf einem hitzestabilen, gebrannten Kohlenstoffkörper aufweist, dadurch gekennzeichnet, daß die Komponente durch die gleichzeitige Hitzebehandlung von einem geschichteten Kompositen aus zwei Vorläufern erhalten wird, die die gleiche partikuläre, mikropyretische Reaktionsmischung und das gleiche kolloidale Bindemittel enthalten, bei der:
die Aluminium-benetzbare, feuerfeste Beschichtung aus einer Vorläuferschicht erhältlich ist, die eine partikuläre, mikropyretische Reaktionsmischung, die reagiert, wenn entzündet, um mindestens ein Aluminium-benetzbares, feuerfestes Material zu bilden, und Nicht-Kohlenstoff-Füllstoffe und Bindemittel enthält; und
der hitzestabile, gebrannte, Kohlenstoff-enthaltende Körper aus einem nichtgebrannten oder teilweise gebrannten Vorläufer erhältlich ist, der partikulären Kohlenstoff verdichtet mit der Reaktionsmischung enthält, die reagiert, wenn entzündet, um den hitzestabilen, Kohlenstoff-enthaltenden Körper der vollständig gefertigten Zellenkomponente zu bilden.

140. Zellenkomponente nach Anspruch 139, die eine Kathode ist oder einen Teil des kathodischen Zellenbodens bildet.

141. Zellenkomponente nach den Ansprüchen 139 oder 140, die vor der Verwendung aluminisiert wird.

142. Aluminiumproduktionszelle, die eine Zellenkomponente nach einem der Ansprüche 139 bis 141 enthält, wobei die Komponente während des Betriebs der Zelle geschmolzenem Kryolit oder Aluminium ausgesetzt ist.

## Revendications

1. Composant partiellement manufacturé d'une cellule de production d'aluminium, en particulier une cathode ou une garniture de cellule d'une cellule pour la production d'aluminium par l'électrolyse d'alumine dans un électrolyte d'halogénure fondu, lequel composant de cellule lorsqu'il est complètement manufacturé comprend un revêtement réfractaire mouillable par l'aluminium sur un corps contenant du carbone cuit et stable à la chaleur, ledit composant de cellule partiellement manufacturé étant réalisé par un composite en couches de deux précurseurs, comprenant:
- une couche-précurseur d'un matériau réfractaire mouillable par l'aluminium, ladite couche-précurseur contenant au moins un matériau réfractaire mouillable par l'aluminium sous forme particulaire, ou un mélange de réaction particulaire micropyrétique qui, lorsqu'il est allumé, réagit pour former au moins un matériau réfractaire mouillable par l'aluminium, ou un mélange de ceux-ci, et des remplisseurs et liants non-carbonés; sur
- un précurseur non-cuit ou partiellement cuit du corps stable à la chaleur contenant du carbone, comprenant du carbone particulaire compacté avec un liant convertible à la chaleur qui, lorsqu'il est soumis à un traitement à la chaleur, lie le carbone particulaire dans le corps stable à la chaleur contenant du carbone du composant de cellule complètement manufacturé;
ce composite en couche étant convertible dans le composant de cellule complètement manufacturé par un traitement à la chaleur, lequel forme ledit matériau réfractaire mouillable par l'aluminium et simultanément lie et stabilise par la chaleur le corps contenant du carbone.

2. Le composant de cellule partiellement manufacturé de la revendication 1, dans lequel le précurseur du corps stable à la chaleur contenant du carbone comprend un mélange de carbone particulaire compacté, un mélange de réaction particulaire micropyrétique qui lorsqu'il est allumé réagit pour former au moins un matériau réfractaire mouillable par l'aluminium, et un liant colloïdal.

3. Le composant de cellule partiellement manufacturé de la revendication 2, dans lequel la couche-précurseur de matériau réfractaire mouillable par l'aluminium contient un mélange de réaction particulaire micropyrétique qui, lorsqu'il est allumé, réagit pour former au moins un matériau réfractaire mouillable par l'aluminium, mélangé avec un matériau réfractaire mouillable par l'aluminium particulaire préformé et un liant colloïdal.

4. Le composant de cellule partiellement manufacturé de la revendication 3, dans lequel le précurseur du corps stable à la chaleur contenant du carbone et la couche-précurseur du matériau réfractaire mouillable par l'aluminium contiennent chacun le même mélange de réaction et le même liant colloïdal.

5. Le composant de cellule partiellement manufacturé de la revendication 4, dans lequel le précurseur du corps stable à la chaleur contenant du carbone contient de 0,5 à 20 parts en poids de carbone particulaire pour une part en poids du mélange de réaction, et ladite couche-précurseur contient de 0,5 à 20 parts en poids du matériau réfractaire particulaire mouillable par l'aluminium préformé pour une part en poids de mélange de réaction.

6. Le composant de cellule partiellement manufacturé de la revendication 5, dans lequel le précurseur du corps stable à la chaleur contenant du carbone contient de 1 à 8 parts en poids, préférablement de 1,5 à 4 parts en poids, de carbone particulaire pour 1 part en poids de mélange de réaction, et ladite couche-précurseur contient de 1 à 8 parts en poids, préférablement de 1,5 à 4 parts en poids, de matériau réfractaire préformé particulaire mouillable par l'aluminium pour 1 part en poids de mélange de réaction.

7. Le composant de cellule partiellement manufacturé de la revendication 4, dans lequel la fraction de poids du mélange de réaction dans le précurseur du corps stable à la chaleur contenant du carbone est au moins approximativement le même que la fraction de poids du mélange de réaction dans ladite couche-précurseur.

8. Le composant de cellule partiellement manufacturé de la revendication 4, dans lequel le mélange de réaction comprend de l'aluminium, de l'oxyde de bore et du dioxyde de titane au moins approximativement dans le rapport molaire 10 Al : 3 B₂O₃ : 3TiO₂.

9. Le composant de cellule partiellement manufacturé de la revendication 2, dans lequel le mélange de réaction et le carbone particulaire du précurseur du corps stable à la chaleur contenant du carbone sont mélangés avec 0,1 ml à 1 ml, préférablement de 0,15 ml à 0,5 ml, de liant colloïdal par gramme de mélange de réaction plus le carbone particulaire.

10. Le composant de cellule partiellement manufacturé de la revendication 9, dans lequel le liant colloïdal du précurseur du corps stable à la chaleur contenant du carbone comprend au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

11. Le composant de cellule partiellement manufacturé de la revendication 3, dans lequel le mélange de réaction et le matériau réfractaire particulaire préformé de ladite couche-précurseur sont mélangés avec 0,1 ml à 1 ml, préférablement de 0,15 ml à 0,5 ml, de liant colloïdal par gramme de mélange de réaction plus matériau réfractaire dur particulaire préformé.

12. Le composant de cellule partiellement manufacturé de la revendication 11, dans lequel le liant colloïdal de ladite couche-précurseur comprend au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

13. Le composant de cellule partiellement manufacturé des revendications 12 ou 13, dans lequel la couche précurseur du revêtement réfractaire mouillable par l'aluminium ainsi que le précurseur du corps stable à la chaleur contenant du carbone contiennent tous les deux de l'alumine colloïdale.

14. Le composant de cellule partiellement manufacturé de la revendication 2, dans lequel la couche-précurseur du revêtement réfractaire mouillable par l'aluminium consiste de matériau réfractaire particulaire préformé dans un colloïde séché.

15. Le composant de cellule partiellement manufacturé de la revendication 14, dans lequel le matériau réfractaire particulaire préformé dans ladite couche-précurseur est un borure sélectionné parmi les borures de titane, de chrome, de vanadium, de zirconium, de hafnium, de niobium, de tantale, de molybdène et de cérium.

16. Le composant de cellule partiellement manufacturé de la revendication 15, dans lequel ledit borure réfractaire préformé particulaire dans ladite couche-précurseur est le diborure de titane et le mélange de réaction du précurseur du matériau stable à la chaleur contenant du carbone réagit pour produire du diborure de titane.

17. Le composant de cellule partiellement manufacturé de la revendication 15, dans lequel le borure réfractaire particulaire préformé dans ladite couche-précurseur a une taille de particule inférieure à 100 micromètres.

18. Le composant de cellule partiellement manufacturé de la revendication 17, dans lequel le borure réfractaire particulaire préformé dans ladite couche-précurseur comprend des particules de tailles différentes afin d'optimiser l'entassement des particules, dont le rapport de tailles de particules est d'au moins 2:1.

19. Le composant de cellule partiellement manufacturé de la revendication 18, dans lequel les particules du borure réfractaire particulaire préformé ont un rapport de tailles dans l'intervalle de 3:1 à 10:1.

20. Le composant de cellule partiellement manufacturé de la revendication 18, dans lequel le borure réfractaire particulaire préformé dans ladite couche-précurseur comprend des particules dont les tailles sont dans l'intervalle d'environ 3 micromètres à environ 50 micromètres.

21. Le composant de cellule partiellement manufacturé de la revendication 1, dans lequel le précurseur du corps stable à la chaleur contenant du carbone comprend un mélange compacté de carbone particulaire avec de l'aluminium et avec au moins un composé de lithium, d'aluminium, de cérium, de calcium et de sodium dans un porteur liquide, lequel mélange réagit lorsqu'il est chauffé pour former un liant comprenant au moins un parmi le carbure d'aluminium, l'oxycarbure d'aluminium, le nitrure d'aluminium et l'oxynitrure d'aluminium ou leurs mélanges avec l'aluminium métallique.

22. Le composant de cellule partiellement manufacturé de la revendication 21, dans lequel le précurseur du corps stable à la chaleur contenant du carbone comprend un composé d'aluminium sélectionné parmi le nitrate d'aluminium, le carbonate d'aluminium, les halogénures d'aluminium, le borate d'aluminium et le carbure d'aluminium et leurs mélanges.

23. Le composant de cellule partiellement manufacturé de la revendication 22, dans lequel le précurseur du corps stable à la chaleur contenant du carbone comprend un composé de lithium sélectionné parmi l'acétate de lithium, le carbonate de lithium, le fluorure de lithium, le chlorure de lithium, l'oxalate de lithium, le nitrure de lithium, le nitrate de lithium, le formate de lithium et l'aryle de lithium, le tétraborate de lithium et leurs mélanges.

24. Le composant de cellule partiellement manufacturé de la revendication 22, dans lequel le précurseur du corps stable à la chaleur contenant du carbone comprend de 1 à 20 parts en poids d'aluminium particulaire pour 80 à 99 parts en poids de carbone particulaire.

25. Le composant de cellule partiellement manufacturé de la revendication 24, dans lequel l'aluminium particulaire et le carbone particulaire sont mélangés avec les composés dans le porteur liquide dans une quantité de 5 à 20 ml de porteur liquide par 100 grammes d'aluminium particulaire et de carbone particulaire.

26. Le composant de cellule partiellement manufacturé de la revendication 21, dans lequel ledit porteur liquide comprend un agent liant sélectionné parmi la méthylcellulose, l'alcool polyvinylique et les colloïdes, en particulier l'alumine colloïdale.

27. Le composant de cellule partiellement manufacturé de la revendication 26, dans lequel le porteur liquide comprend un colloïde d'au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

28. Le composant de cellule partiellement manufacturé de la revendication 24, dans lequel l'aluminium particulaire dans le précurseur du corps stable à la chaleur en carbone a une dimension d'au plus 44 micromètres (maille -325).

29. Le composant de cellule partiellement manufacturé de la revendication 24, dans lequel l'aluminium particulaire du précurseur du corps stable à la chaleur en carbone est de l'aluminium broyé humide dérivé de déchets de feuilles.

30. Le composant de cellule partiellement manufacturé de la revendication 21, dans lequel la couche-précurseur du revêtement réfractaire mouillable par l'aluminium contient un mélange de réaction micropyrétique particulaire qui, lorsqu'il est allumé, réagit pour former au moins un matériau réfractaire mouillable par l'aluminium, mélangé avec un matériau réfractaire mouillable par l'aluminium particulaire préformé et un liant colloïdal.

31. Le composant de cellule partiellement manufacturé de la revendication 30, dans lequel ladite couche-précurseur contient de 0,5 à 20 parts en poids du matériau réfractaire particulaire mouillable par l'aluminium préformé pour une part en poids de mélange de réaction.

32. Le composant de cellule partiellement manufacturé de la revendication 31, dans lequel la couche-précurseur contient de 1 à 8 parts en poids, préférablement de 1,5 à 4 parts en poids, de matériau réfractaire préformé particulaire mouillable par l'aluminium pour 1 part en poids de mélange de réaction.

33. Le composant de cellule partiellement manufacturé de la revendication 30, dans lequel le mélange de réaction comprend de l'aluminium, de l'oxyde de bore, du dioxyde de titane et du diborure de titane comme remplisseur, au moins approximativement dans le rapport molaire de 10 Al : 3 B₂O₃ : 3 TiO₂ : jusqu'à 20 TiB₂.

34. Le composant de cellule partiellement manufacturé de la revendication 21, dans lequel la couche-précurseur du revêtement réfractaire mouillable par l'aluminium consiste de matériau réfractaire particulaire préformé dans un colloïde séché.

35. Le composant de cellule partiellement manufacturé de la revendication 34, dans lequel le matériau réfractaire particulaire préformé de ladite couche-précurseur est un borure sélectionné parmi les borures de titane, de chrome, de vanadium, de zirconium, de hafnium, de niobium, de tantale, de molybdène et de cérium.

36. Le composant de cellule partiellement manufacturé de la revendication 35, dans lequel ledit borure réfractaire de ladite couche-précurseur est le diborure de titane, et le mélange de réaction du précurseur du matériau stable à la chaleur contenant du carbone réagit pour produire du diborure de titane.

37. Le composant de cellule partiellement manufacturé de la revendication 35, dans lequel le borure réfractaire particulaire préformé de ladite couche-précurseur a une taille de particule inférieure à 100 micromètres.

38. Le composant de cellule partiellement manufacturé de la revendication 37, dans lequel le borure réfractaire particulaire préformé dans ladite couche-précurseur comprend des particules de tailles différentes pour optimiser l'entassement des particules, dont le rapport de tailles de particules est d'au moins 2:1.

39. Le composant de cellule partiellement manufacturé de la revendication 38, dans lequel le rapport de tailles de particules du borure réfractaire particulaire préformé est dans l'intervalle de 3:1 à 10:1.

40. Le composant de cellule partiellement manufacturé de la revendication 39, dans lequel le borure réfractaire particulaire préformé de ladite couche-précurseur comprend des particules dont les tailles sont dans l'intervalle d'environ 3 micromètres à environ 50 micromètres.

41. Le composant de cellule partiellement manufacturé de la revendication 1, dans lequel le précurseur du corps stable à la chaleur contenant du carbone comprend un mélange compacté de carbone particulaire avec un liant colloïdal non-polluant et non-carboné et optionnellement avec un ou plusieurs remplisseurs, le liant étant une suspension d'un ou plusieurs colloïdes, ou étant dérivé d'un ou plusieurs précurseurs de colloïdes ou de réactifs optionnellement avec un ou plusieurs agents chélateurs.

42. Le composant de cellule partiellement manufacturé de la revendication 41, dans lequel ledit liant est une suspension contenant au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

43. Le composant de cellule partiellement manufacturé de la revendication 41, dans lequel le précurseur du corps stable à la chaleur contenant du carbone comprend un ou plusieurs remplisseurs sélectionnés parmi: des matériaux améliorant la cohésion comme la méthyle-cellulose, de l'alumine particulaire ou de l'urée; des matériaux métalliques, intermétalliques, semi-métalliques, polymères, réfractaires et/ou céramiques comme les borures, les carbures, les nitrures, les siliciures, les oxydes, les oxynitrures, et leurs mélanges; les chlorosilanes pyrolysables, les polycarbosilanes, les polysilanes et d'autres polymères organométalliques qui pyrolysent en produits utiles à l'amélioration de la cohésion, ou leurs produits pyrolysés; des résines thermodurcissables; des résines thermoplastiques; et leurs mélanges.

44. Le composant de cellule partiellement manufacturé de la revendication 41, dans lequel le précurseur du corps stable à la chaleur contenant du carbone comprend de l'aluminium métallique comme remplisseur, sous forme particulaire, de copeaux, de tournures, ou de morceaux de déchets broyés, ou leurs mélanges.

45. Le composant de cellule partiellement manufacturé de la revendication 41, dans lequel le précurseur du corps stable à la chaleur contenant du carbone comprend de 50 à 99 % en poids de carbone particulaire (préférablement de 50 à 95 %), 0 à 30 % en poids de remplisseurs et 1 à 30 % en poids de liant (préférablement 5 à 30 %).

46. Le composant de cellule partiellement manufacturé de la revendication 45, dans lequel le précurseur du corps stable à la chaleur contenant du carbone comprend de l'aluminium, de l'alumine, ou un mélange d'aluminium et d'alumine comme remplisseur(s), et de l'alumine colloïdale comme liant.

47. Le composant de cellule partiellement manufacturé de la revendication 41, dans lequel la couche-précurseur du revêtement réfractaire mouillable par l'aluminium contient un mélange de réaction micropyrétique particulaire qui, lorsqu'il est allumé, réagit pour former au moins un matériau réfractaire mouillable par l'aluminium, mélangé avec un matériau réfractaire micropyrétique particule préformé et un liant colloïdal.

48. Le composant de cellule partiellement manufacturé de la revendication 47, dans lequel ladite couche-précurseur contient de 0,5 à 20 parts en poids de matériau réfractaire mouillable par l'aluminium particulaire préformé pour 1 part en poids du mélange de réaction.

49. Le composant de cellule partiellement manufacturé de la revendication 48, dans lequel ladite couche-précurseur contient de 1 à 8 parts en poids, préférablement de 1,5 à 4 parts en poids, de matériau réfractaire mouillable par l'aluminium particulaire préformé pour 1 part en poids du mélange de réaction.

50. Le composant de cellule partiellement manufacturé de la revendication 47, dans lequel le mélange de réaction comprend de l'aluminium, de l'oxyde de bore et du dioxyde de titane au moins approximativement dans le rapport molaire 10 Al : 3 B₂O₃ : 3TiO₂.

51. Le composant de cellule partiellement manufacturé de la revendication 41, dans lequel la couche-précurseur du revêtement réfractaire mouillable par l'aluminium consiste en matériau réfractaire particulaire préformé dans un colloïde séché.

52. Le composant de cellule partiellement manufacturé de la revendication 51, dans lequel le matériau réfractaire particulaire préformé de ladite couche-précurseur est un borure sélectionné parmi les borures de titane, de chrome, de vanadium, de zirconium, de hafnium, de niobium, de tantale, de molybdène et de cérium.

53. Le composant de cellule partiellement manufacturé de la revendication 52, dans lequel ledit borure réfractaire de ladite couche-précurseur est le diborure de titane et le mélange de réaction du précurseur du matériau stable à la chaleur contenant du carbone réagit pour produire du diborure de titane.

54. Le composant de cellule partiellement manufacturé de la revendication 52, dans lequel le borure réfractaire particulaire préformé de ladite couche-précurseur a une taille de particule inférieure à 100 micromètres.

55. Le composant de cellule partiellement manufacturé de la revendication 54, dans lequel le borure réfractaire particulaire préformé de ladite couche-précurseur comprend des particules de tailles différentes pour optimiser l'entassement des particules, dont le rapport de tailles de particules est d'au moins 2:1.

56. Le composant de cellule partiellement manufacturé de la revendication 55, dans lequel le rapport de tailles de particules du borure réfractaire particulaire préformé est dans l'intervalle de 3:1 à 10:1.

57. Le composant de cellule partiellement manufacturé de la revendication 55, dans lequel le borure réfractaire particulaire préformé de ladite couche-précurseur comprend des particules avec des tailles dans l'intervalle d'environ 3 micromètres à environ 50 micromètres.

58. Le composant de cellule partiellement manufacturé de la revendication 1, dans lequel le carbone particulaire du corps stable à la chaleur contenant du carbone est sélectionné parmi le coke de pétrole, le coke métallurgique, l'anthracite, le graphite, le carbone amorphe, le fullerène ou leurs mélanges.

59. Le composant de cellule partiellement manufacturé de la revendication 58, dans lequel la taille du carbone particulaire est jusqu'à 40 mm, préférablement entre 1 micromètre et 30 mm.

60. Le composant de cellule partiellement manufacturé de la revendication 59, dans lequel le carbone particulaire contient entre 5 % et 40% de particules ayant une taille inférieure à 0,2 mm.

61. Le composant de cellule partiellement manufacturé de la revendication 58, dans lequel au moins une partie du carbone particulaire, du liant et/ou du remplisseur est fibreuse.

62. Le composant de cellule partiellement manufacturé de la revendication 1, dans lequel le corps stable à la chaleur contenant du carbone résultant contient au moins 50 % en poids de carbone.

63. Le composant de cellule partiellement manufacturé de la revendication 1, dans lequel le corps stable à la chaleur contenant du carbone résultant contient de 70 à 85 % en poids de carbone.

64. Le composant de cellule partiellement manufacturé de la revendication 1, dans lequel le précurseur du corps stable à la chaleur contenant du carbone comprend un ou plusieurs remplisseurs sélectionnés parmi: des matériaux améliorant la cohésion comme la méthyle-cellulose, de l'alumine particulaire ou de l'urée; des matériaux métalliques, intermétalliques, semi-métalliques, polymères, réfractaires et/ou céramiques comme les borures, les carbures, les nitrures, les siliciures, les oxydes, les oxynitrures, et leurs mélanges; les chlorosilanes pyrolysables, les polycarbosilanes, les polysilanes et d'autres polymères organométalliques qui pyrolysent en produits utiles à l'amélioration de la cohésion, ou leurs produits pyrolysés; des résines thermodurcissables; des résines thermoplastiques; et leurs mélanges.

65. Le composant de cellule partiellement manufacturé de la revendication 1, dans lequel le précurseur du corps stable à la chaleur contenant du carbone comprend un mélange compact de carbone particulaire avec du brai en tant que liant carboné traitable à la chaleur.

66. Le composant de cellule partiellement manufacturé de la revendication 65, dans lequel le précurseur du corps stable à la chaleur contenant du carbone comprend un mélange compact d'anthracite, de coke métallurgique, et de graphite particulaires avec du brai.

67. Le composant de cellule partiellement manufacturé de la revendication 65, dans lequel le précurseur du corps stable à la chaleur contenant du carbone comprend en plus un liant colloïdal non-carboné.

68. Le composant de cellule partiellement manufacturé de la revendication 65, dans lequel la couche-précurseur du revêtement réfractaire mouillable par l'aluminium contient un mélange de réaction micropyrétique particulaire qui, lorsqu'il est allumé, réagit pour former au moins un matériau réfractaire mouillable par l'aluminium, mélangé avec un matériau réfractaire mouillable par l'aluminium particulaire préformém et un liant colloïdal.

69. Le composant de cellule partiellement manufacturé de la revendication 65, dans lequel la couche-précurseur du revêtement réfractaire mouillable par l'aluminium consiste de matériau réfractaire particulaire préformé dans un colloïde séché.

70. Une méthode de fabrication d'un composant d'une cellule de production d'aluminium, en particulier une cathode ou un garnissage de cellule d'une cellule électrolytique pour la production d'aluminium par l'électrolyse d'alumine dans un électrolyte d'halogénure fondu, lequel composant de cellule comprend un couche de revêtement réfractaire mouillable par l'aluminium sur un corps stable à la chaleur contenant du carbone cuit, la méthode comprenant :
- la fourniture d'un composant de cellule partiellement manufacturé qui est un composite en couche de deux précurseurs, comme défini dans la revendication 1; et
- la conversion du composite en couche dans le composant de cellule entièrement manufacturé par un traitement à la chaleur pour former ledit revêtement réfractaire mouillable par l'aluminium et simultanément lier et stabiliser à la chaleur le corps contenant du carbone.

71. La méthode de la revendication 70, dans laquelle le précurseur du corps stable à la chaleur contenant du carbone est fourni en mélangeant du carbone, particulaire, un mélange de réaction micropyrétique particulaire qui lorsqu'il est allumé réagit pour former au moins un matériau réfractaire mouillable par l'aluminium, et un liant colloïdal, et en compactant le mélange.

72. La méthode de la revendication 71, dans laquelle la couche-précurseur du revêtement réfractaire mouillable par l'aluminium est fourni en mélangeant un mélange de réaction micropyrétique particulaire qui, lorsqu'il est allumé, réagit pour former au moins un matériau réfractaire mouillable par l'aluminium, avec un matériau réfractaire mouillable par l'aluminium particulaire préformé et un liant colloïdal; et dans laquelle le composite en couche est chauffé rapidement pour allumer les deux mélanges de réaction substantiellement simultanément.

73. La méthode de la revendication 71, comprenant la fourniture d'une couche-précurseur du revêtement réfractaire mouillable par l'aluminium et un précurseur du corps stable à la chaleur contenant du carbone, lesquels contiennent chacun le même mélange de réaction et le même liant colloïdal.

74. La méthode de la revendication 73, dans laquelle le précurseur du corps stable à la chaleur contenant du carbone est formé en mélangeant de 0,5 à 20 parts en poids de carbone particulaire pour 1 part en poids du mélange de réaction, et ladite couche-précurseur contient de 0,5 à 20 parts en poids du matériau réfractaire particulaire mouillable par l'aluminium préformé pour 1 part en poids de mélange de réaction.

75. La méthode de la revendication 74, dans laquelle le précurseur de corps stable à la chaleur contenant du carbone est formé en mélangeant 1 à 8 parts en poids, préférablement de 1,5 à 4 parts en poids, de carbone particulaire pour 1 part en poids de mélange de réaction, et ladite couche-précurseur contient de 1 à 8 parts en poids, préférablement de 1,5 à 4 parts en poids, de matériau réfractaire préformé particulaire mouillable par l'aluminium pour 1 part en poids de mélange de réaction.

76. La méthode de la revendication 74, dans laquelle la fraction de poids de mélange de réaction dans le précurseur du corps stable à la chaleur contenant du carbone est au moins approximativement le même que la fraction de poids du mélange de réaction dans ladite couche-précurseur.

77. La méthode de la revendication 73, dans laquelle le mélange de réaction comprend de l'aluminium, de l'oxyde de bore et du dioxyde de titane au moins approximativement dans le rapport molaire 10 Al : 3 B₂O₃ : 3TiO₂.

78. La méthode de la revendication 70, dans laquelle le carbone particulaire du corps stable à la chaleur contenant du carbone est sélectionné parmi le coke de pétrole, le coke métallurgique, l'anthracite, le graphite, le carbone amorphe, le fullerène ou leurs mélanges.

79. La méthode de la revendication 78, dans laquelle la taille du carbone particulaire est jusqu'à 40 mm, préférablement entre 1 micromètre et 30 mm.

80. La méthode de la revendication 79, dans laquelle le carbone particulaire contient entre 5 % et 40 % de particules ayant une taille inférieure à 0,2 mm.

81. La méthode de la revendication 78, dans laquelle au moins une partie du carbone particulaire est fibreuse.

82. La méthode de la revendication 70, dans laquelle le corps stable à la chaleur contenant du carbone résultant contient au moins 50 % en poids de carbone.

83. La méthode de la revendication 82, dans laquelle le corps stable à la chaleur contenant du carbone résultant contient de 70 à 85 % en poids de carbone.

84. La méthode de la revendication 71, dans laquelle le mélange de réaction et le carbone particulaire du précurseur du corps stable à la chaleur contenant du carbone sont mélangés avec 0,1 ml à 1 ml, préférablement de 0,15 ml à 0,5 ml, de liant colloïdal par gramme de mélange de réaction plus le carbone particulaire.

85. La méthode de la revendication 84, dans laquelle le liant colloïdal du précurseur du corps stable à la chaleur contenant du carbone comprend au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

86. La méthode de la revendication 72, dans laquelle le mélange de réaction et le matériau réfractaire particulaire préformé de ladite couche-précurseur sont mélangés avec 0,1 ml à 1 ml, préférablement de 0,15 ml à 0,5 ml, de liant colloïdal par gramme de mélange de réaction plus matériau réfractaire particulaire préformé.

87. La méthode de la revendication 86, dans laquelle le liant colloïdal de ladite couche-précurseur comprend au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

88. La méthode des revendications 85 et 87, dans laquelle la couche précurseur du revêtement réfractaire mouillable par l'aluminium et le précurseur du corps stable à la chaleur contenant du carbone contiennent tous les deux de l'alumine colloïdale.

89. La méthode de la revendication 71, dans laquelle la couche-précurseur de matériau réfractaire mouillable par l'aluminium est réalisée par l'application d'un matériau réfractaire particulaire préformé dans un colloïde, et le séchage, et la consolidation du matériau réfractaire particulaire préformé par un traitement par la chaleur.

90. La méthode de la revendication 89, dans laquelle le matériau réfractaire particulaire préformé dans ladite couche-précurseur est un borure sélectionné parmi les borures de titane, de chrome, de vanadium, de zirconium, de hafnium, de niobium, de tantale, de molybdène et de cérium.

91. La méthode de la revendication 90, dans laquelle ledit borure réfractaire dans ladite couche-précurseur est le diborure de titane et le mélange de réaction du précurseur du matériau stable à la chaleur contenant du carbone réagit pour produire du diborure de titane.

92. La méthode de la revendication 90, dans laquelle le borure réfractaire particulaire préformé de ladite couche-précurseur a une taille de particule inférieure à 100 micromètres.

93. La méthode de la revendication 92, dans laquelle le borure réfractaire particulaire préformé de ladite couche-précurseur comprend des particules de tailles différentes pour optimiser l'entassement des particules, dont le rapport de tailles de particules est d'au moins 2:1.

94. La méthode de la revendication 93, dans laquelle le rapport de tailles de particules du borure réfractaire particulaire préformé est dans l'intervalle de 3:1 à 10:1.

95. La méthode de la revendication 93, dans laquelle le borure réfractaire particulaire préformé de ladite couche-précurseur comprend des particules avec des tailles dans l'intervalle d'environ 3 micromètres à environ 50 micromètres.

96. La méthode de la revendication 70, dans laquelle le précurseur du corps stable à la chaleur contenant du carbone comprend un mélange compacté de carbone particulaire avec de l'aluminium et avec au moins un composé de lithium, d'aluminium, de cérium, de calcium et de sodium dans un porteur liquide, lequel mélange réagit lorsqu'il est chauffé pour former un liant comprenant au moins un parmi le carbure d'aluminium, l'oxycarbure d'aluminium, le nitrure d'aluminium et l'oxynitrure d'aluminium ou leurs mélanges avec l'aluminium métallique.

97. La méthode de la revendication 96, dans laquelle le précurseur du corps stable à la chaleur contenant du carbone comprend un composé d'aluminium sélectionné parmi le nitrate d'aluminium, le carbonate d'aluminium, les halogénures d'aluminium, le borate d'aluminium et le carbure d'aluminium et leurs mélanges.

98. La méthode de la revendication 97, dans laquelle le précurseur du corps stable à la chaleur contenant du carbone comprend un composé de lithium sélectionné parmi l'acétate de lithium, le carbonate de lithium, le fluorure de lithium, le chlorure de lithium l'oxalate de lithium, le nitrure de lithium le nitrate de lithium, le formate de lithium et l'aryle de lithium, le tétraborate de lithium et leurs mélanges.

99. La méthode de la revendication 97, dans laquelle le précurseur du corps stable à la chaleur contenant du carbone comprend de 1 à 20 parts en poids d'aluminium particulaire pour 80 à 99 parts en poids de carbone particulaire.

100. La méthode de la revendication 99, dans laquelle l'aluminium particulaire et le carbone particulaire sont mélangés avec les composés dans le porteur liquide dans une quantité de 5 à 20 ml de porteur liquide par 100 grammes d'aluminium particulaire et de carbone particulaire.

101. La méthode de la revendication 96, dans laquelle ledit porteur liquide comprend un agent liant sélectionné parmi la méthyl-cellulose, l'alcool polyvinylique et les colloïdes, en particulier l'alumine colloïdale.

102. La méthode de la revendication 101, dans laquelle le porteur liquide comprend un colloïde d'au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

103. La méthode de la revendication 99, dans laquelle l'aluminium particulaire du précurseur du corps en stable à la chaleur carbone a une dimension d'au plus 44 micromètres (maille -325).

104. La méthode de la revendication 99, dans laquelle l'aluminium particulaire du précurseur du corps stable à la chaleur en carbone est de l'aluminium broyé humide dérivé de déchets de feuilles.

105. La méthode de la revendication 96, dans laquelle la couche-précurseur du revêtement réfractaire mouillable par l'aluminium contient un mélange de réaction micropyrétique particulaire qui, lorsqu'il est allumé, réagit pour former au moins un matériau réfractaire mouillable par l'aluminium, mélangé avec un matériau réfractaire mouillable par l'aluminium particulaire préformé et un liant colloïdal.

106. La méthode de la revendication 105, dans laquelle ladite couche-précurseur contient de 0,5 à 20 parts en poids du matériau réfractaire particulaire mouillable par l'aluminium préformé pour une part en poids de mélange de réaction.

107. La méthode de la revendication 106, dans laquelle la couche-précurseur contient de 1 à 8 parts en poids, préférablement de 1,5 à 4 parts en poids, de matériau réfractaire préformé particulaire mouillable par l'aluminium pour 1 part en poids de mélange de réaction.

108. La méthode de la revendication 105, dans laquelle le mélange de réaction comprend de l'aluminium, de l'oxyde de bore, du dioxyde de titane et du diborure de titane comme remplisseur, au moins approximativement dans le rapport molaire de 10 Al : 3 B₂O₃ : 3 TiO₂ : jusqu'à 20 TiB₂.

109. La méthode de la revendication 96, dans laquelle la couche-précurseur du matériau réfractaire est fournie à partir d'un matériau réfractaire particulaire préformé dans un colloïde et séchage.

110. La méthode de la revendication 109, dans laquelle le matériau réfractaire particulaire préformé dans ladite couche-précurseur est un borure sélectionné parmi les borures de titane, de chrome, de vanadium, de zirconium, de hafnium, de niobium, de tantale, de molybdène et de cérium.

111. La méthode de la revendication 110, dans laquelle lequel ledit borure réfractaire de ladite couche-précurseur est le diborure de titane, et le mélange de réaction du précurseur du matériau stable à la chaleur contenant du carbone réagit pour produire du diborure de titane.

112. La méthode de la revendication 110, dans laquelle le borure réfractaire particulaire préformé dans ladite couche-précurseur a une taille de particule inférieure à 100 micromètres.

113. La méthode de la revendication 110, dans laquelle le borure réfractaire particulaire préformé dans ladite couche-précurseur comprend des particules de tailles différentes pour optimiser l'entassement des particules, dont le rapport de tailles de particules est d'au moins 2:1.

114. La méthode de la revendication 113, dans laquelle le rapport de tailles de particules du borure réfractaire particulaire préformé est dans l'intervalle de 3:1 à 10:1.

115. La méthode de la revendication 114, dans laquelle le borure réfractaire particulaire préformé de ladite couche-précurseur comprend des particules dont les tailles sont dans l'intervalle d'environ 3 micromètres à environ 50 micromètres.

116. La méthode de la revendication 70, dans laquelle le précurseur du corps stable à la chaleur contenant du carbone comprend un mélange compacté de carbone particulaire avec un liant colloïdal non-polluant et non-carboné et optionnellement avec un ou plusieurs remplisseurs, le liant étant une suspension d'un ou plusieurs colloïdes, ou étant dérivé d'un ou plusieurs précurseurs de colloïdes ou de réactifs optionnellement avec un ou plusieurs agents chélateurs.

117. La méthode de la revendication 116, dans laquelle ledit liant est une suspension contenant au moins un parmi l'alumine, la silice, l'oxyde d'yttrium, l'oxyde de cérium, l'oxyde de thorium, l'oxyde de zirconium, l'oxyde de magnésium, l'oxyde de lithium et leurs hydroxydes, acétates et formates colloïdaux ainsi que les oxydes et hydroxydes d'autres métaux, des espèces cationiques et leurs mélanges.

118. La méthode de la revendication 116, dans laquelle le précurseur du corps stable à la chaleur contenant du carbone comprend un ou plusieurs remplisseurs sélectionnés parmi: des matériaux améliorant la cohésion comme la méthyle-cellulose, de l'alumine particulaire ou de l'urée; des matériaux métalliques, intermétalliques, semi-métalliques, polymères, réfractaires et/ou céramiques comme les borures, les carbures, les nitrures, les siliciures, les oxydes, les oxynitrures, et leurs mélanges; les chlorosilanes pyrolysables, les polycarbosilanes, les polysilanes et d'autres polymères organométalliques qui pyrolysent en produits utiles à l'amélioration de la cohésion, ou leurs produits pyrolysés; des résines thermodurcissables; des résines thermoplastiques; et leurs mélanges.

119. La méthode de la revendication 116, dans laquelle le précurseur du corps stable à la chaleur contenant du carbone comprend de l'aluminium métallique comme remplisseur, sous forme particulaire, de copeaux, de tournures, ou de morceaux de déchets broyés, ou leur mélange.

120. La méthode de la revendication 116, dans laquelle le précurseur du corps stable à la chaleur contenant du carbone comprend de 50 à 99 % en poids de carbone particulaire (préférablement de 50 à 95 %), 0 à 30 % en poids de remplisseurs et 1 à 30 % en poids de liant (préférablement 5 à 30 %).

121. La méthode de la revendication 120, dans laquelle le précurseur du corps stable à la chaleur contenant du carbone comprend de l'aluminium, de l'alumine, ou un mélange d'aluminium et d'alumine comme remplisseur, et de l'alumine colloïdale comme liant.

122. La méthode de la revendication 116, dans laquelle la couche-précurseur du revêtement réfractaire mouillable par l'aluminium contient un mélange de réaction micropyrétique particulaire qui, lorsqu'il est allumé, réagit pour former au moins un matériau réfractaire mouillable par l'aluminium, mélangé avec un matériau réfractaire micropyrétique particule préformé et un liant colloïdal.

123. La méthode de la revendication 122, dans laquelle ladite couche-précurseur contient de 0,5 à 20 parts en poids de matériau réfractaire mouillable par l'aluminium particulaire préformé, pour 1 part en poids du mélange de réaction.

124. La méthode de la revendication 123, dans laquelle ladite couche-précurseur contient de 1 à 8 parts en poids, préférablement de 1,5 à 4 parts en poids, de matériau réfractaire mouillable par l'aluminium particulaire préformé, pour 1 part en poids du mélange de réaction.

125. La méthode de la revendication 122, dans laquelle le mélange de réaction comprend de l'aluminium, de l'oxyde de bore et du dioxyde de titane au moins approximativement dans le rapport molaire 10 Al : 3 B₂O₃ : 3TiO₂.

126. La méthode de la revendication 116, dans laquelle la couche-précurseur du revêtement réfractaire mouillable par l'aluminium est fournie à partir d'un matériau réfractaire particulaire préformé dans un colloïde et par séchage.

127. La méthode de la revendication 126, dans laquelle le matériau réfractaire particulaire préformé dans ladite couche-précurseur est un borure sélectionné parmi les borures de titane, de chrome, de vanadium, de zirconium, de hafnium, de niobium, de tantale, de molybdène et de cérium.

128. La méthode de la revendication 127, dans laquelle ledit borure réfractaire de ladite couche-précurseur est le diborure de titane, et le mélange de réaction du précurseur du matériau stable à la chaleur contenant du carbone réagit pour produire du diborure de titane.

129. La méthode de la revendication 127, dans laquelle le borure réfractaire particulaire préformé de ladite couche-précurseur a une taille de particule inférieure à 100 micromètres.

130. La méthode de la revendication 129, dans laquelle le borure réfractaire particulaire préformé de ladite couche-précurseur comprend des particules de tailles différentes pour optimiser l'entassement des particules, dont le rapport de tailles de particules est d'au moins 2:1.

131. La méthode de la revendication 130, dans laquelle le rapport de tailles de particules du borure réfractaire particulaire préformé est dans l'intervalle de 3:1 à 10:1.

132. La méthode de la revendication 130, dans laquelle le borure réfractaire particulaire préformé de ladite couche-précurseur comprend des particules avec des tailles dans l'intervalle d'environ 3 micromètres à environ 50 micromètres.

133. La méthode de la revendication 70, dans laquelle le carbone particulaire du précurseur corps stable à la chaleur contenant du carbone est sélectionné parmi le coke de pétrole, le coke métallurgique, l'anthracite, le graphite, le carbone amorphe, le fullerène ou leurs mélanges.

134. La méthode de la revendication 70, dans laquelle ledit traitement la chaleur est suivi par l'aluminisation de la couche de revêtement réfractaire mouillable par l'aluminium, préférablement en plaçant ladite surface en contact avec l'aluminium fondu en présence d'un agent mordant.

135. Une méthode d'assemblage et de fonctionnement d'une cellule de récupération électrolytique de l'aluminium contenant un électrolyte fondu à base de cryolite pour produire de l'aluminium, ladite méthode comprenant la conversion par un traitement à la chaleur d'un composant partiellement manufacturé selon la revendication 1 pour produire un corps entièrement manufacturé consistant d'un composant à base de carbone revêtu avec un revêtement réfractaire mouillable par l'aluminium; en plaçant ledit composant dans la cellule de manière que le revêtement en matériau réfractaire soit mis en contact avec la cryolite ou l'aluminium produit cathodiquement; en dissolvant et en électrolysant l'alumine dans l'électrolyte pour produire de l'aluminium.

136. La méthode de la revendication 135, dans laquelle le composant partiellement manufacturé est converti par un traitement à la chaleur en un composant entièrement manufacturé avant d'être placé ou assemblé dans la cellule.

137. La méthode de la revendication 135, dans laquelle le composant entièrement manufacturé est une cathode ou forme une partie d'un fond de cellule cathodique.

138. La méthode de la revendication 135, dans laquelle le composant entièrement manufacturé est aluminisé avant d'électrolyser l'alumine dissoute.

139. Un composant d'une cellule de production d'aluminium, en particulier une cathode ou un garnissage de cellule d'une cellule électrolytique pour la production d'aluminium par l'électrolyse d'alumine dans un électrolyte d'halogénure fondu, ledit composant de cellule comprenant un revêtement réfractaire mouillable par l'aluminium sur un corps stable à la chaleur en carbone cuit, caractérisé en ce que le composant est obtenu par un traitement par la chaleur simultané d'un composite en couche de deux précurseurs contenant le même mélange de réaction micropyrétique particulaire et le même liant colloïdal, dans lequel:
- le revêtement réfractaire mouillable par l'aluminium est susceptible d'être obtenu à partir d'une couche-précurseur contenant un mélange de réaction micropyrétique particulaire qui, lorsqu'il est allumé, réagit pour former au moins un matériau réfractaire mouillable par l'aluminium, et des remplisseurs et liants non-carbonés; et
- le corps stable à la chaleur contenant du carbone cuit est susceptible d'être obtenu à partir d'un précurseur en carbone non-cuit ou partiellement cuit compacté avec le mélange de réaction pour former le corps stable à la chaleur contenant du carbone du composant de cellule entièrement manufacturé.

140. Le composant de cellule de la revendication 139, lequel est une cathode ou forme une partie d'un fond de cellule cathodique.

141. Le composant de cellule de la revendication 139 ou 140, lequel est aluminisé avant d'électrolyser l'alumine dissoute.

142. Une cellule de production d'aluminium comprenant un composant de cellule selon n'importe laquelle des revendications 139 à 141, lequel composant est exposé à la cryolite fondue ou à l'aluminium lors du fonctionnement de la cellule.
